(19) Europäisches Patentamt
European Patent Office
Office européen des brevets

(11) **EP 1 326 425 B1**

(12) **EUROPEAN PATENT SPECIFICATION**

(45) Date of publication and mention
of the grant of the patent:
**20.08.2008 Bulletin 2008/34**

(51) Int Cl.:
***H04N 1/60*** *(2006.01)*

(21) Application number: **02024500.7**

(22) Date of filing: **30.10.2002**

(54) **Apparatus and method for adjusting saturation of color image**

Vorrichtung und Verfahren zur Farbbildsättingungsregelung

Appareil et procéde de régulation de la saturation d'images en couleurs

(84) Designated Contracting States:
**DE GB NL**

(30) Priority: **24.12.2001 KR 2001084109**

(43) Date of publication of application:
**09.07.2003 Bulletin 2003/28**

(73) Proprietor: **SAMSUNG ELECTRONICS CO., LTD.
Suwon-City, Kyungki-do (KR)**

(72) Inventor: **Kim, Moon-cheol
Giheung-eup,
Yongin-si,
Gyeonggi-do (KR)**

(74) Representative: **Grünecker, Kinkeldey,
Stockmair & Schwanhäusser
Anwaltssozietät
Leopoldstrasse 4
80802 München (DE)**

(56) References cited:
**EP-A- 0 989 739       EP-A- 1 130 545
EP-A- 1 335 583       US-A- 4 203 671
US-A- 5 181 105**

EP 1 326 425 B1

**Description**

The present invention relates to an apparatus and method for adjusting the saturation of a color image, and more particularly, to an apparatus and method for adjusting the color saturation of an input image in a digital TV, photo-shop, digital camera, camcoder, and computer-based image processor to provide a quality image to a user.

A conventional image processor increases the saturation of an input image irrespective of the characteristic of the input image. As an example, when the background saturation is increased in a TV screen, the saturation of a facial image of persons is also increased, so that the persons appear unnatural due to the supersaturation of the skin color.

A conventional image enhancement system processes input data without considering whether or not the input data is a kind of a test pattern image, thereby making it difficult to control the quality of the image to be displayed on a particular display.

EP 0 989 739 A relates to a technique of image quality adjustment for adjusting an acquired image to a state desired by an operator. A saturation adjusting process for generating a transform function for adjusting the saturation is introduced. First, a luminance histogram and saturation histogram is formed based on the luminance and saturation of each pixel of the input image. After smoothing the histogram, histogram parameters are determined, a highlight value, a shadow value and a central value. Thereafter, based on the histogram parameters, a transform function for adjusting the overall histogram is generated. Then, based on the object color, a correction function for correcting the transform function is calculated and finally, by multiplying the transform function by the correction function, a final transform function is generated.

EP 1 130 545 A relates to tone scale processing of digital images. A technique for generating an image-dependent tone scale curve is introduced. First, an image activity histogram is computed for an input image value as a function of the number of neighboring pixels that have a predetermined amount of image modulation exclusive of a predetermined noise modulation. Then, an image-dependent tone scale curve is constructed from the image activity histogram.

US 5 181 105 A relates to processing a color image signal. A circuit is described to provide a color image signal consisting of a luminance signal and two color difference signals. A converter converts the two color difference signals into the hue signal and saturation signal. A compressing circuit independently compresses the dynamic ranges of one of or both of the luminance signal and the saturation signal and outputs the signals. A memory stores the hue signal and the output of the compressing circuit. Finally, a color printer reproduces the color image on the basis of the hue signal, saturation signal, and luminance signal which are stored in the memory.

US 4 203 671 A relates to a technique for detecting flesh color in photographic color originals in a photographic color printing process. Red, green and blue densities of a number of points of a color negative or original are measured. If the measured values of the densities fall within an ellipsoid when plotted in a three dimensional coordinate system or within an ellipse when plotted in two-dimensional coordinate system the axes of which represent the red, green and blue densities or combinations of the three color densities, the measured point is determined to have flesh color.

It is the object of the present invention to increase the quality of saturation adjustment of an input image.

This object is solved by the subject matter of the independent claims. Preferred embodiments are defined by the dependent claims.

Accordingly, it is an aspect of the present invention to provide an apparatus and method for adaptively adjusting the saturation of an input color image in consideration of the characteristic of the input color image.

It is another aspect of the present invention to provide an apparatus and method for selectively adjusting the saturation in a particular region of an input image while maintaining the skin color in the input image, thereby providing a user with natural color impression.

It is another aspect of the present invention to provide an apparatus and method for adaptively adjusting the saturation of a color image, in which when a test pattern image is input, the saturation adjustment is bypassed to enable quality control of the image to be displayed on a particular display.

In particular, the present invention provides an apparatus for adjusting the saturation of a color image according to independent claims 1 and 19. The present invention also provides a method for adjusting the saturation of a color image according to independent claims 42 and 45. Further embodiments are set forth in dependent claims 2-18, 20-41, 43, 44 and 46.

The above aspects and advantages of the present invention will become more apparent by describing in detail exemplary embodiments thereof with reference to the attached drawings in which:

FIG. 1 shows a saturation adjusting apparatus according to an embodiment of the present invention;

FIG. 2 shows a saturation histogram according to the present invention;

FIG. 3 shows a gain function for a peak gain value according to the present invention;

FIG. 4 shows a pattern gain function for a pattern gain value according to the present invention;

FIG. 5 shows gain functions for a color gain value according to the present invention;

FIG. 6 shows other gain functions for the color gain value according to the present invention;

FIG. 7 shows a saturation adjusting apparatus according to another embodiment of the present invention;

FIG. 8 shows gain functions for a mean gain value and a local gain value according to the present invention; and

FIG. 9 shows a saturation adjusting apparatus according to still another embodiment of the present invention.

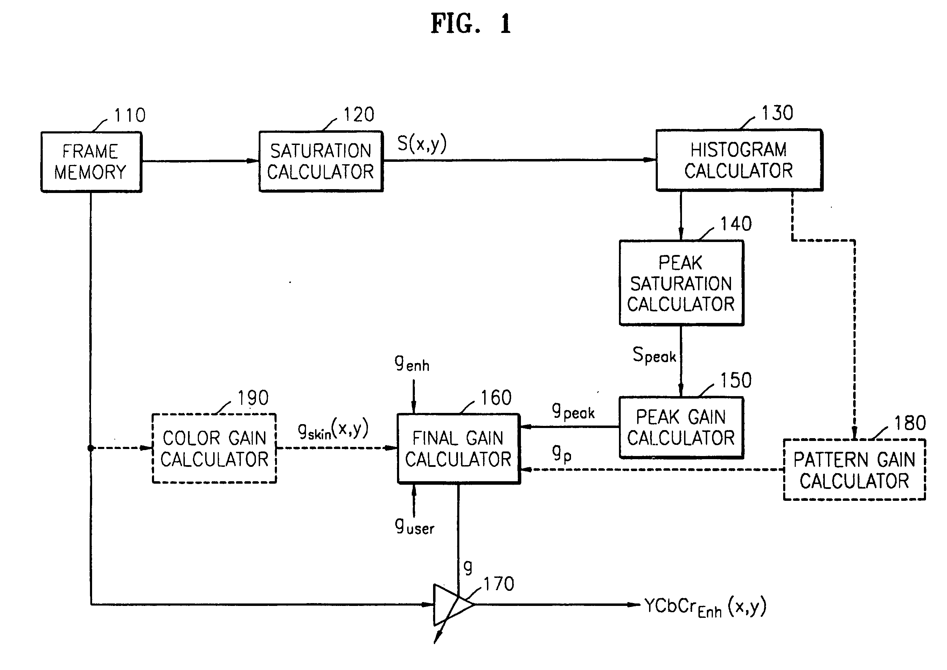

Embodiments of the present invention will be described in detail with reference to the appended drawings.
A saturation adjusting apparatus according to an embodiment of the present invention is shown in FIG. 1. Referring to FIG. 1, the saturation adjusting apparatus includes a frame memory 110, a saturation calculator 120, a histogram calculator 130, a peak saturation calculator 140, a peak gain calculator 150, a final gain calculator 160, and a saturation adjustor 170.
The frame memory 110 stores an input image signal. The saturation calculator 120 calculates a saturation value $S(x,y)$ for each of pixels stored in the frame memory 110. The histogram calculator 130 calculates a saturation histogram for all pixels of the image or a local window region from the saturation value $S(x,y)$ of each of the pixels calculated by the saturation calculator 120. The peak saturation calculator 140 determines a peak saturation value $s_{peak}$ from the histogram calculated by the histogram calculator 130, and the peak gain calculator 150 calculates a peak gain value $g_{peak}$ from the peak saturation value $S_{peak}$. A gain value g to be applied to pixels is determined by using the peak gain value $g_{peak}$, a selectively applicable system gain value value $g_{enh}$, and a user gain value $g_{user}$ which is adjusted by the user: An input pixel signal $YCbCr(x,y)$ is processed with the gain value g to obtain a saturation-adjusted final output signal $YCbCr_{enh}(x,y)$.
An embodiment of the present invention will be described below with reference to FIGS. 1 through 3.
After the input image signal is stored in the frame memory 110, the saturation calculator 120 calculates a saturation value $S(x,y)$ for each of the pixels input from the frame memory 110. In the embodiment, the saturation value $S(x,y)$ is calculated using equations 1 and 2 below, wherein equation 1 is applied to convert the pixel signal $YCbCr$ into an RGB signal to comply with the specification of ITU-R BT.709-4, and equation 2 is applied to the RGB signal.

$$(R,G,B) = (Y + a \cdot Cr, \ Y + b \cdot Cr + c \cdot Cb, \ Y + d \cdot Cb) \qquad ...(1)$$

where a, b, c, and d are conversion coefficients.

$$S = \frac{Max[R,G,B] - Min[R,G,B]}{Max[R,G,B] + Min[R,G,B]}$$
$$or \qquad\qquad ...(2)$$
$$S = \frac{Max[R,G,B] - Min[R,G,B]}{Max[R,G,B]}$$

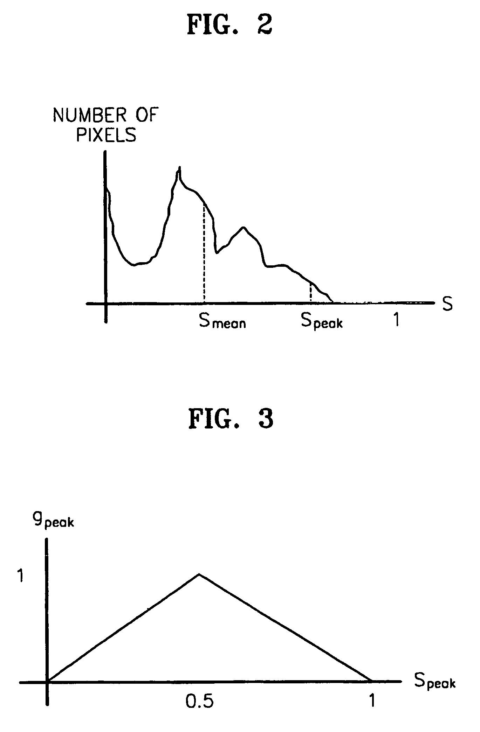

where S is a normalized saturation value between 0 and 1. When hardware is designed to set the normalized saturation value S in an integer format of [0, 100], a histogram as shown in FIG. 2 can be obtained by accumulating the saturation values of all pixels. If $Max[R,G,B]$ for the normalized saturation value S has a very small or very large value, S is not accumulated considering image noise.
The peak saturation calculator 140 determines a saturation value of the pixels corresponding to 0.5% of the total number of pixels from the pixel having the largest saturation value, as the peak saturation value $S_{peak}$, from the histogram calculated by the histogram calculator 130, as shown in FIG. 2. Here, the limit of 0.5% was determined considering noises of the input image, and can be varied depending on noise levels.

The peak gain calculator 150 determines the peak gain value $g_{peak}$ using the peak saturation value $S_{peak}$ determined by the peak saturation calculator 140 and a gain function of FIG. 3. According to the gain function of FIG. 3, a peak gain value $g_{peak}$ is 0 for a peak saturation value $S_{peak}$ of 1, linearly increases as the peak saturation value $S_{peak}$ decreases from 1 to 0.5, and gradually linearly attenuates and converges to zero as the peak saturation value $S_{peek}$ decreases from 0.5 to 0. Therefore, the gain function of FIG. 3 is effective to reduce an extremely large gain for a gray input image.

The final gain calculator 160 calculates the final gain g for the input image using the peak gain value $g_{peak}$ calculated by the peak gain calculator 150, the system gain value $g_{enh}$, and the user gain value $g_{user}$, as expressed in equation 3:

$$g \ = \ g_{user} \ \cdot \ (1+g_{enh} \cdot g_{peak}) \qquad ...(3)$$

The system gain value $g_{enh}$ controls degrees of the color image enhancement. When the system gain value $g_{enh}$ is 0, there is no image enhancement effect. The image quality is greatly enhanced with increasing system gain value $g_{enh}$ more than 1. A general system gain value default is a value between 0.5 and 1 and is determined through a visual test using a number of observers.

The user gain value $g_{user}$ is similar to a value set by the user on an existing color TV receiver using a saturation adjuster, which is usually indicated by a "color button". When the user gain value $g_{user}$ is 0, a gray image is displayed. The saturation of the image is increased with increasing user gain value $g_{user}$ more than 1. A general user gain value default is 1 for standard color image display.

The saturation adjustor 170 outputs a saturation-adjusted signal $YCbCr_{enh}(x,y)$ by applying the final gain g calculated by the final gain calculator 160 to the original color signals Cb and Cr of each of the pixels, as expressed in equation 4:

$$(Y, Cb, Cr)_{enh}(x,y) = (Y(x,y), \ g \cdot Cb(x,y), \ g \cdot Cr(x,y)) \qquad ...(4)$$

Through the saturation adjustment for all pixels of one frame in the above-described manner, color enhancement and equalization for the frame are complete.

Although the gain function of FIG. 3 is used in the embodiment, a variety of gain functions having no discontinuity can be applied if necessary.

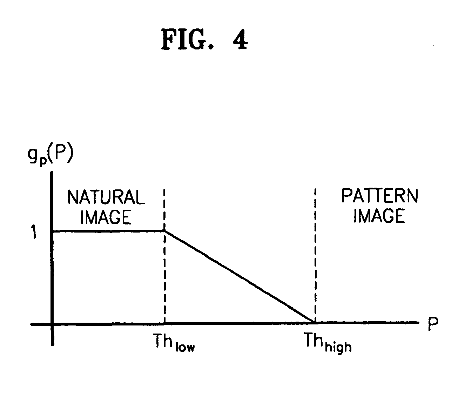

Another embodiment of the present invention will be described below with reference to FIGS. 1 and 4. In this embodiment, the frame memory 110, the saturation calculator 120, the histogram calculator 130, the peak saturation calculator 140, and the peak gain calculator 150 described in the previous embodiment provide the same functions as in the previous embodiment, and thus detailed descriptions thereon will be omitted here.

The peak saturation calculator 140 determines the peak saturation value $s_{peak}$ from the histogram formed by the histogram calculator 130, as shown in FIG. 2, and the peak gain calculator 150 calculates the peak gain value $g_{peak}$ using the gain function of FIG. 3.

A pattern gain calculator 180 detects a test pattern image or a monotone image, for example, an image of a bird flying in the sky or an image of sunset, and calculates a pattern gain value $g_p$ for the test pattern image or monotone image. Compared with a general natural image, apparently from their histogram, the test pattern image and the monotone image have relatively high frequency components. In consideration of this characteristic of the test pattern image and monotone image, the absolute value of a pixel count difference between adjacent saturation regions is calculated for the entire saturation histogram (i=1, ... , N-1), and an average of the absolute values for all saturation regions is calculated as a P value, as expressed in equation 5:

$$P = \frac{1}{N} \sum_{i=1}^{N-1} \left| H(i) - H(i+1) \right| \qquad ...(5)$$

where $H(i)$ denotes the number of pixels in a saturation region i. The pattern gain value $g_p$ is calculated using a pattern gain function of FIG. 4 and the P value calculated by using equation 5. In the pattern gain function of FIG. 4, $Th_{Low}$ and

$Th_{High}$ vary depending on the normalization of the maximum count in the histogram. When the P value is smaller than $Th_{Low}$, the input image corresponds to a general natural image (having a continuous histogram). When the P value is greater than $Th_{High}$ (having a discrete histogram), the input image corresponds to a test pattern image. Accordingly, when the input image has a P value corresponding to a general natural image, the pattern gain value $g_p$ is set to 1. When the input image has a P value corresponding to a test pattern, the pattern gain value $g_p$ is set to 0 to bypass the saturation adjustment for the original input image.

When the input image has a P value between $Th_{Low}$ and $Th_{High}$, the input image corresponds to a monotone image. In this case, an excess increase in the saturation of the monotone image degrades picture quality. Accordingly, the pattern gain value $g_p$ for such a monochrome image is reduced inversely with respect to the P value.

This pattern detection algorithm is resistant to noise and is simple in process, and thus can be practically applied with reliability.

The final gain calculator 160 calculates a final gain g for the input image using the peak gain value $g_{peak}$ calculated by the peak gain calculator 150, the pattern gain value $g_p$ calculated by the pattern gain calculator 180, the system gain value $g_{enh}$, and the user gain value $g_{user}$, as expressed in equation 6:

$$g = g_{user} \cdot (1 + g_{enh} \cdot g_p \cdot g_{peak}) \qquad \ldots(6)$$

The saturation adjustor 170 outputs a saturation-adjusted signal $YCbCr_{enh}(x,y)$ by applying the final gain g calculated by the final gain calculator 160 to the original color signals $Cb$ and $Cr$ of each of the pixels, which is calculated using equation 4 above.

Through the saturation adjustment for all pixels of one frame in the above-described manner, color enhancement and equalization for the frame are complete.

Although the pattern gain function of FIG. 4 is used in the above embodiment, a variety of pattern gain functions having no discontinuity can be applied if necessary.

Another embodiment of the present invention will be described below with reference to FIGS. 1, 5, and 6. In this embodiment, the frame memory 110, the saturation calculator 120, the histogram calculator 130, the peak saturation calculator 140, and the peak gain calculator 150 shown in FIG. 1 and described in the previous embodiment provide the same functions as in the previous embodiment, and thus detailed descriptions thereon will be omitted here.

A color gain calculator 190 calculates a color gain value $g_{skin}(x,y)$ depending on whether each pixel of the input image belongs to a skin color region. To determine whether a pixel value input to the color gain calculator 190 belongs to the skin color region, it is necessary to track the position of the skin color region in the YCbCr color space.

In the present invention, a method using an ellipsoidal gain function and a logic "AND" combination method of gain functions for Y, Cb, Cr signals are suggested to determine whether the input pixel belongs to the skin color region. The two methods can be applied to any color space, for example, RGB, YUV, CIELAB, and CIELUV spaces.

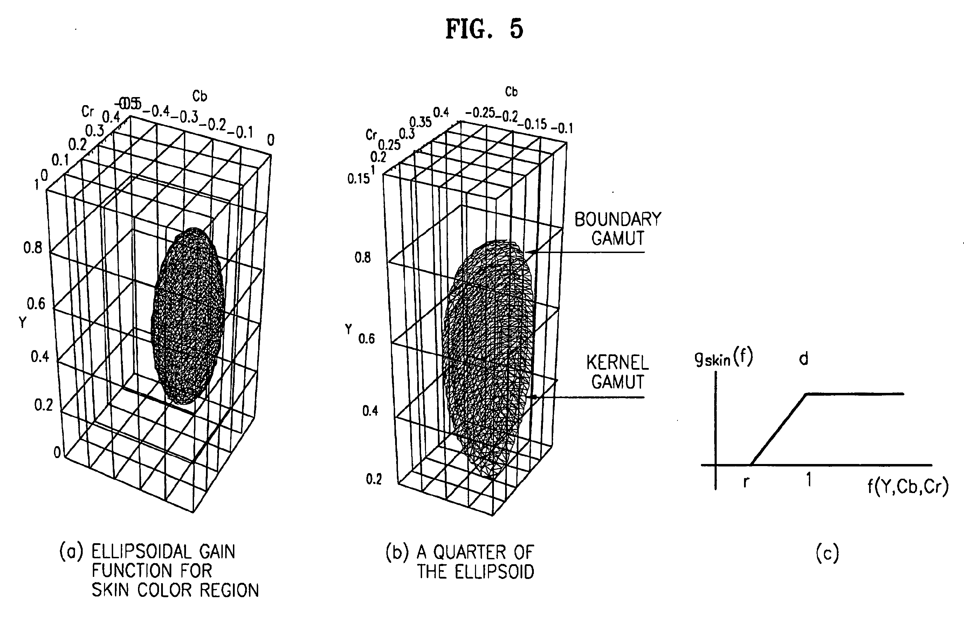

In the method using a 3-D ellipsoidal gain function, as shown in (a) of FIG. 5, a mean color value (Ym, Cbm, Crm) of the skin color region is determined as the center coordinate of the ellipsoid, and race- or system-dependent skin color variations of three axes of the ellipsoidal equation are determined as radii (Yr, Cbr, Crr) of the ellipsoid, which is expressed in equation 7 below:

$$f(Y, Cb, Cr) = \left(\frac{Y - Ym}{Yr}\right)^2 + \left(\frac{Cb - Cbm}{Cbr}\right)^2 + \left(\frac{Cr - Crm}{Crr}\right)^2 \qquad \ldots(7)$$

The color gain value $g_{skin}(x,y)$ for a given pixel is derived using $f(Y, Cb, Cr)$ calculated using equation 7 above. When $f(Y, Cb, Cr)$ for the $YCbCr$ value of the given pixel is smaller than r, the pixel is determined to belong to the skin color region. Especially, a region of the ellipsoid with $f(Y, Cb, Cr) = r$ is called "kernel gamut", as shown in (b) of FIG. 5. When $f(Y, Cb, Cr)$ for an input pixel is in the kernel gamut, the input pixel is determined to belong to the skin color region, and the color gain value $g_{skin}(x,y)$ is set to 0.

When $f(Y, Cb, Cr)$ for an input pixel is greater than 1, the input pixel is determined not to belong to the skin color region. Especially, a region of the ellipsoid with $f(Y, Cb, Cr) = r$ is called "boudary gamut", as shown in (b) of FIG. 5. For a pixel which is beyond the boundary gamut, the color gain value $g_{skin}(x,y)$ is set to 1.

When $f(Y, Cb, Cr)$ for an input pixel has a value between the kernel gamut and the boundary gamut, the color gain value $g_{skin}(x,y)$ for the input pixel is set to $(f(Y, Cb, Cr) - r)/(1-r)$, based on the linear graph between r and 1 providing continuity between the kernel gamut and the boundary gamut, as shown in (c) of FIG. 5, to consider skin color variations in a source image and to ensure continuity of color in the kernel gamut and the boundary gamut.

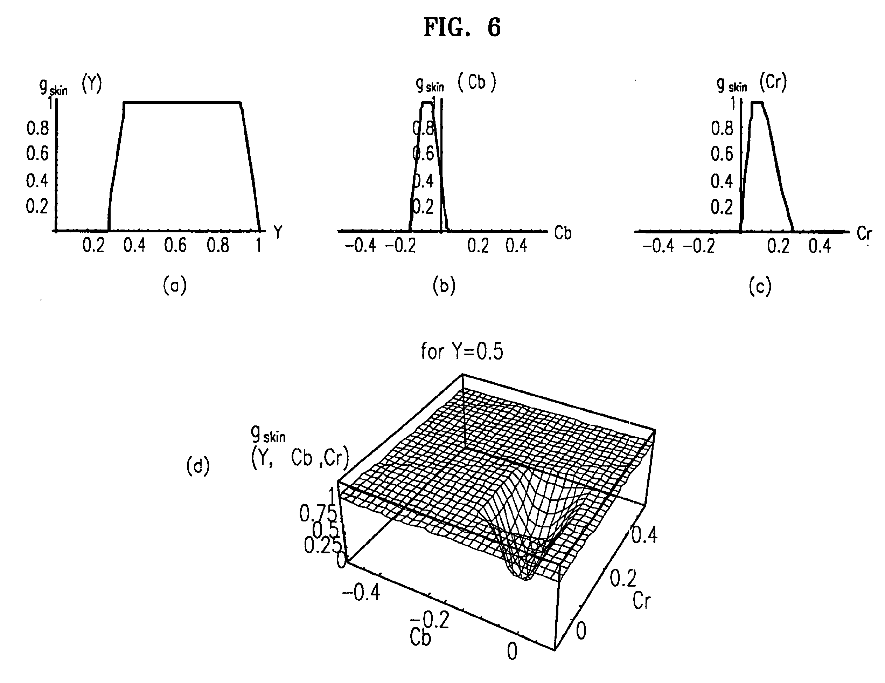

In the other method to determine whether the input image belongs to the skin color region, a skin color gain function for each of the Y, Cb, and Cr signals is defined, as shown in (a), (b), and (c) of FIG. 6, and the three gain functions are combined by logic AND operation, which are expressed in equation 8 below:

$$g_{skin}(Y, Cb, Cr) = 1 - [g_{skin}(Y) \cdot g_{skin}(Cb) \cdot g_{skin}(Cr)] \qquad ...(8)$$

As an example, (d) of FIG. 6 shows the skin color gain function $g_{skin}(Y, Cb, Cr)$ for Y=0.5 in the 3-D YCbCr color coordinate system.

The color gain calculator 190 calculates the color gain value $g_{skin}(x,y)$ varying according to the color coordinate of the input pixel by using one of the above-described methods.

The final gain calculator 190 calculates a final gain $g(x,y)$ for the input image, which varies according to the color coordinate and saturation of the pixels, using the peak gain value $g_{peak}$ calculated by the peak gain calculator 150, the color gain value $g_{skin}(x,y)$ calculated by the color gain calculator 190, the system gain value $g_{enh}$, and the user gain value $g_{user}$, as expressed in equation 9:

$$g(x,y) = g_{user} \cdot (1 + g_{enh} \cdot g_{skin}(x,y) \cdot g_{peak}) \qquad ...(9)$$

The saturation adjustor 170 outputs a saturation-adjusted signal $YCbCr_{enh}(x,y)$ by applying the final gain $g(x,y)$ calculated by the final gain calculator 160 to the original color signals $Cb$ and $Cr$ of each of the pixels, as expressed in equation 10 below:

$$(Y, Cb, Cr)_{enh}(x,y) = (Y(x,y), g(x,y) \cdot Cb(x,y), g(x,y) \cdot Cr(x,y)) \qquad ...(10)$$

Through the saturation adjustment for all pixels of one frame in the above-described manner, color enhancement and equalization for the frame are complete.

Another embodiment of the present invention will be described with reference to FIGS. 1 through 6. In this embodiment, the frame memory 110, the saturation calculator 120, the histogram calculator 130, the peak saturation calculator 140, the peak gain calculator 150, the pattern gain calculator 180, and the color gain calculator 190 shown in FIG. 1 and described in the previous embodiment provide the same functions as in the previous embodiment, and thus detailed descriptions thereon will be omitted here.

The final gain calculator 160 calculates a final gain $g(x,y)$ for the input image, which varies according to the color coordinate and saturation of the pixels, using the peak gain value $g_{peak}$ calculated by the peak gain calculator 150, the color gain value $g_{skin}(x,y)$ calculated by the color gain calculator 190, the pattern gain value $gp$ calculated by the pattern gain calculator 180, the system gain value $g_{enh}$, and the user gain value $g_{user}$, as expressed in equation 11:

$$g(x,y) = g_{user} \cdot (1 + g_{enh} \cdot g_{skin}(x,y) \cdot g_p \cdot g_{peak}) \qquad ...(11)$$

The saturation adjustor 170 outputs a saturation-adjusted signal $YCbCr_{enh}(x,y)$ by applying the final gain $g(x,y)$ calculated by the final gain calculator 160 to the original color signals $Cb$ and $Cr$ of each of the pixels, as expressed in equation 10 above.

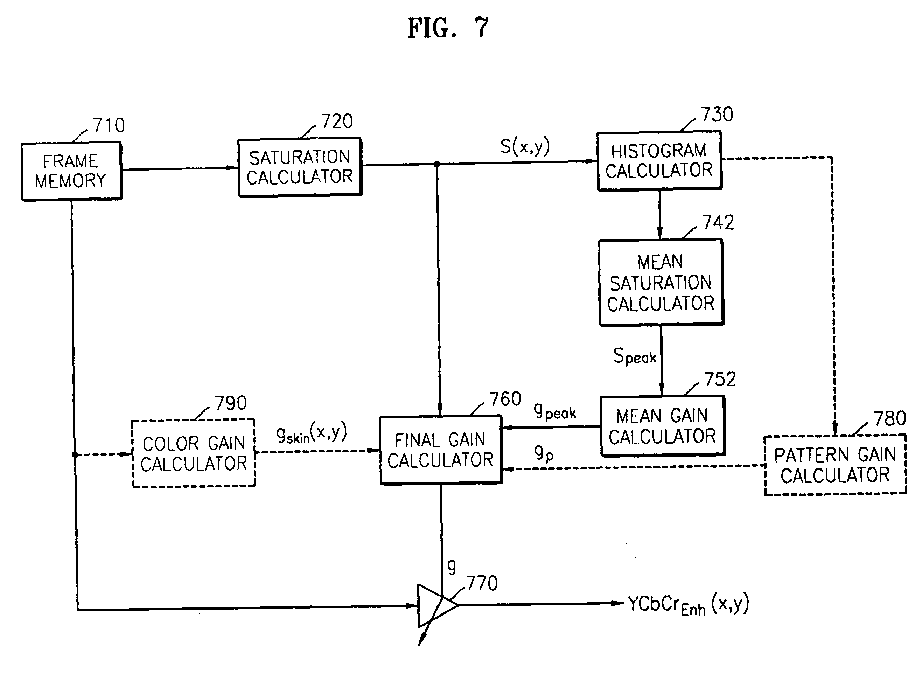

Another embodiment of the present invention will be described with reference to FIGS. 2, 7, and 8. A frame memory 710, a saturation calcutor 720, and a histogram calculator 730 shown in FIG. 7 provide the same functions as in the previous embodiments described with reference to FIG. 1, and thus detailed descriptions thereon will be omitted here.

A mean saturation calculator 742 calculates a mean saturation value $S_{mean}$ from the histogram of FIG. 2 obtained by the histogram calculator 730.

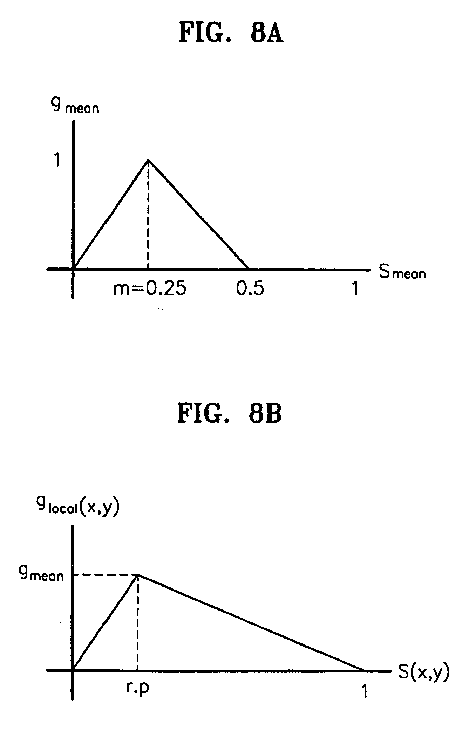

A mean gain calculator 752 calculates a mean gain value $g_{mean}$ using the mean saturation value $S_{mean}$ determined by the mean saturation calculator 742 and a gain function of (a) in FIG. 8. According to the gain function (a) of FIG. 8, when the mean saturation value $S_{mean}$ of the input image is greater than or equal to 0.5, the mean gain value $g_{mean}$ is set to 0 to bypass processing on the original image. The mean gain value $g_{mean}$ is linearly increased as the mean saturation value $S_{mean}$ decreases from 0.5 to 0.25. The mean gain value $g_{mean}$ is reduced for a gray image as the mean saturation value $S_{mean}$ approaches 0 from 0.25.

The final gain calculator 760 calculates a local gain value $g_{local}(x,y)$ for each pixel using the gain function (b) of FIG. 8 obtained from the mean gain value $g_{mean}$ and the saturation value $S(x,y)$ for the corresponding pixel calculated by the saturation calculator 720. According to the gain function (b) of FIG. 8, the maximum value at the inflection point is equal to the mean gain value $g_{mean}$ calculated by the mean gain calculator 752. The gain value $g_{local}(x,y)$ is reduced for a gray image as the saturation value $S(x,y)$ of the pixel approaches 0 from the inflection point (r.p).

As is apparent from the gain function (b) of FIG. 8, the gain value $g_{local}(x,y)$ for each of the pixels was determined to be smaller for a pixel having a greater saturation value $S(x,y)$, thereby reducing the need for gamut mapping in a conventional image process, which results in an unnatural image having abrupt color variations.

For a rapid calculation of the gain value $g_{local}(x,y)$ for each of the pixels, it is preferable to use an additional memory for storing the data calculated by the saturation calculator 720 as long as the system size is large enough for the amount of memory.

The final gain calculator 760 calculates a final gain $g(x,y)$ for the input image, which varies according to the color coordinate and saturation of the pixels, using the gain value $g_{local}(x,y)$ calculated by the final gain calculator 760, the system gain value $g_{enh}$, and the user gain value $g_{user}$, as expressed in equation 12:

$$g(x,y) = g_{user} \cdot (1 + g_{enh} \cdot g_{local}(x,y)) \qquad \ldots(12)$$

The saturation adjustor 770 outputs a saturation-adjusted signal $YCbCr_{enh}(x,y)$ by applying the final gain $g(x,y)$ calculated by the final gain calculator 160 to the original color signals Cb and Cr of each of the pixels, as expressed in equation 10 above.

Although the gain functions (a) and (b) of FIG. 8 are used in the embodiment, a variety of gain functions having no discontinuity can be applied if necessary.

Another embodiment of the present invention will be described below with reference to FIGS. 4, 7, and 8. In this embodiment, the frame memory 710, the saturation calculator 720, the histogram calculator 730, the mean saturation calculator 742, the mean gain calculator 752, and the pattern gain calculator 780 provide the same functions as in the previous embodiments described with reference to FIGS. 1 and 7, and thus detailed descriptions thereon will be omitted here.

The final gain calculator 760 calculates a final gain $g(x,y)$ for the input image, which varies according to the color coordinate and saturation of the pixels, using the gain value $g_{local}(x,y)$ obtained with the mean gain value $g_{mean}$ calculated by the mean gain calculator 752, the pattern gain value $g_p$ calculated by the gain pattern calculator 780, the system gain value $g_{enh}$, and the user gain value $g_{user}$, as expressed in equation 13:

$$g(x,y) = g_{user} \cdot (1 + g_{enh} \cdot g_p \cdot g_{local}(x,y)) \qquad \ldots(13)$$

The saturation adjustor 770 outputs a saturation-adjusted signal $YCbCr_{enh}(X,Y)$ by applying the final gain $g(x,y)$ calculated by the final gain calculator 160 to the original color signals Cb and $Cr$ of each of the pixels, as expressed in equation 10 above.

Another embodiment of the present invention will be described below with reference to FIGS. 5, 6, 7, and 8. In this embodiment, the frame memory 710, the saturation calculator 720, the histogram calculator 730, the mean saturation calculator 742, the mean gain calculator 752, and the color gain calculator 790 provide the same functions as those in the previous embodiments described with reference to FIGS. 1 and 7, and thus detailed descriptions thereon will be omitted here.

The final gain calculator 760 calculates a final gain $g(x,y)$ for the input image, which varies according to the color coordinate and saturation of the pixels, using the gain value $g_{local}(x,y)$ obtained with the mean gain value $g_{mean}$ calculated by the mean gain calculator 752, the color gain value $g_{skin}(x,y)$ calculated by the color gain calculator 790, the system gain value $g_{enh}$, and the user gain value $g_{user}$, as expressed in equation 14:

$$g(x,y) = g_{user} \cdot (1 + g_{enh} \cdot g_{skin}(x,y) \cdot g_{local}(x,y)) \qquad \dots(14)$$

The saturation adjustor 770 outputs a saturation-adjusted signal $YCbCr_{enh}(x,y)$ by applying the final gain g(x, y) calculated by the final gain calculator 760 to the original color signals Cb and Cr of each of the pixels, as expressed in equation 10 above.

Another embodiment of the present invention will be described below with reference to FIG. 7. In this embodiment, the frame memory 710, the saturation calculator 720, the histogram calculator 730, the mean saturation calculator 742, the mean gain calculator 752, the mean gain calculator 780, and the color gain calculator 790 provide the same functions as in the previous embodiments, and thus detailed descriptions thereon will be omitted here.

The final gain calculator 760 calculates a final gain $g(x,y)$ for the input image, which varies according to the color coordinate and saturation of the pixel, using the gain value $g_{local}(x,y)$ obtained with the mean gain value $g_{mean}$ calculated by the mean gain calculator 752, the pattern gain value $gp$ calculated by the pattern gain calculator 780, the color gain value $g_{skin}(x,y)$ calculated by the color gain calculator 790, the system gain value $g_{enh}$, and the user gain value $g_{user}$ as expressed in equation 15:

$$g(x,y) = g_{user} \cdot (1 + g_{enh} \cdot g_{skin}(x,y) \cdot g_p \cdot g_{local}(x,y)) \qquad \dots(15)$$

The saturation adjustor 770 outputs a saturation-adjusted signal $YCbCr_{enh}(x,y)$ by applying the final gain $g(x, y)$ calculated by the final gain calculator 760 to the original color signals $Cb$ and Cr of each of the pixels, as expressed in equation 10 above.

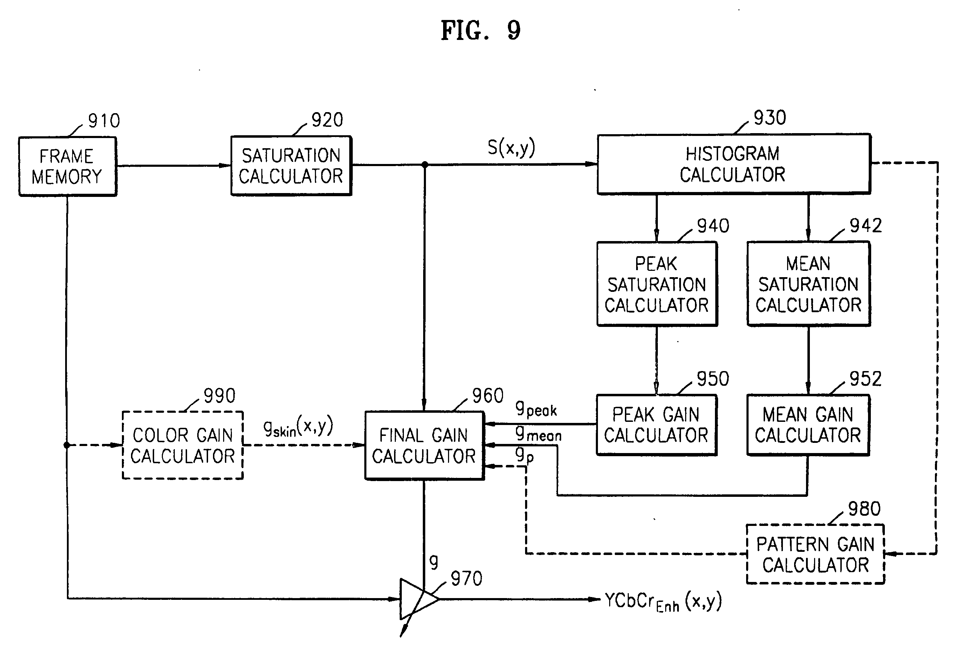

FIG. 9 shows a saturation adjusting apparatus according to another embodiment of the present invention. A frame memory 910, a saturation calculator 920, a histogram calculator 930, a peak saturation calculator 940, a peak gain calculator 950, a mean saturation calculator 942, ad a mean gain calculator 952 provide the same function as those in the previous embodiments described with reference to FIGS. 1 and 7, and thus detailed descriptions thereon will be omitted here.

The final gain calculator 960 calculates a final gain $g(x,y)$ for the input image, which varies according to the color coordinate and saturation of the pixels, using the peak gain value $g_{peak}$ determined by the peak gain calculator 950, the local gain value $g_{local}(x,y)$ obtained with the mean gain value $g_{mean}$ calculated by the mean gain calculator 952, the system gain value $g_{enh}$, and the user gain value $g_{user}$, as expressed in equation 16:

$$g(x,y) = g_{user} \cdot (1 + g_{enh} \cdot (g_{peak} + g_{local}(x,y))) \qquad \dots(16)$$

The saturation adjustor 970 outputs a saturation-adjusted signal $YCbCr_{enh}(x,y)$ by applying the final gain $g(x, y)$ calculated by the final gain calculator 760 to the original color signals Cb and $Cr$ of each of the pixels, as expressed in equation 10 above.

Another embodiment of the present invention will be described below with reference to FIG. 9. In this embodiment, the frame memory 910, the saturation calculator 920, the histogram calculator 930, the peak saturation calculator 940, the peak gain calculator 950, the mean saturation calculator 942, the mean gain calculator 952, and the pattern gain calculator 980 provide the same functions as in the previous embodiments described with reference to FIGS. 1 and 7.

The final gain calculator 960 calculates a final gain $g(x,y)$ for the input image, which varies according to the color coordinate and saturation of the pixels, using the peak gain value $g_{peak}$ determined by the peak gain calculator 950; the local gain value $g_{local}(x,y)$ obtained with the mean gain value $g_{mean}$ calculated by the mean gain calculator 952, the gain pattern value $g_p$ calculated by the pattern gain calculator 980, the system gain value $g_{enh}$, and the user gain value $g_{user}$, as expressed in equation 17:

$$g(x,y) = g_{user} \cdot (1 + g_{enh} \cdot g_p \cdot (g_{peak} + g_{local}(x,y))) \qquad \dots(17)$$

The saturation adjustor 970 outputs a saturation-adjusted signal $YCbCr_{enh}(x,y)$ by applying the final gain $g(x,$

y) calculated by the final gain calculator 760 to the original color signals *Cb* and Cr of each of the pixels, as expressed in equation 10 above.

Another embodiment of the present invention will be described below with reference to FIG. 9. In this embodiment, the frame memory 910, the saturation calculator 920, the histogram calculator 930, the peak saturation calculator 940, the peak gain calculator 950, the mean saturation calculator 942, the average gain calculator 952, and the color gain calculator 990 provide the same functions as in the previous embodiments described with reference to FIGS. 1 and 7.

The final gain calculator 960 calculates a final gain $g(x,y)$ for the input image, which varies according to the color coordinate and saturation of the pixels, using the peak gain value $g_{peak}$ determined by the peak gain calculator 950, the local gain value $g_{local}(x,y)$ obtained with the mean gain value $g_{mean}$ calculated by the mean gain calculator 952, the color gain value $g_{skin}(x,y)$ calculated by the color gain calculator 990, the system gain value $g_{enh}$, and the user gain value $g_{user}$, as expressed in equation 18:

$$g(x,y) = g_{user} \cdot (1 + g_{enh} \cdot g_{skin}(x,y) \cdot (g_{peak} + g_{local}(x,y))) \qquad ...(18)$$

The saturation adjustor 970 outputs a saturation-adjusted signal $YCbCr_{enh}(x,y)$ by applying the final gain g(x, y) calculated by the final gain calculator 760 to the original color signals Cb and *Cr of* each of the pixels, as expressed in equation 10 above.

Another embodiment of the present invention will be described below with reference to FIG. 9. In this embodiment, the frame memory 910, the saturation calculator 920, the histogram calculator 930, the peak saturation calculator 940, the peak gain calculator 950, the mean saturation calculator 942, the mean gain calculator 952, the pattern gain calculator 980, and the color gain calculator 990 provide the same functions as in the previous embodiments described with reference to FIGS. 1 and 7, and thus detailed descriptions thereon will be omitted here.

The final gain calculator 960 calculates a final gain g$(x,y)$ for the input image, which varies according to the color coordinate and saturation of the pixels, using the peak gain value $g_{peak}$ determined by the peak gain calculator 950, the local gain value $g_{local}(X,y)$ obtained with the mean gain value $g_{mean}$ calculated by the mean gain calculator 952, the color gain value $g_{skin}(x,y)$ calculated by the color gain calculator 990, the pattern gain value $g_p$ calculated by the pattern gain calculator 980, the system gain value $g_{enh}$, and the user gain value $g_{user}$, as expressed in equation 19:

$$g(x,y) = g_{user} \cdot (1 + g_{enh} \cdot g_p \cdot g_{skin}(x,y) \cdot (g_{peak} + g_{local}(x,y))) \qquad ...(19)$$

The saturation adjustor 970 outputs a saturation-adjusted signal $YCbCr_{enh}(x,y)$ by applying the final gain g(x, y) calculated by the final gain calculator 760 to the original color signals *Cb* and *Cr of* each of the pixels, as expressed in equation 10 above.

As described above, according to the present invention, the saturation of an output image can be adaptively adjusted using information extracted from an input image, thereby enhancing the quality of the image.

In particular, peak saturation and mean saturation values of the input image are detected and used to correct for the saturation of the input image. When the input image is a quality, high-saturation image, processing on the input image is bypassed. When the input image has a low saturation value, the saturation of, for example, the entire image or a particular color region of the image can be increased for quality enhancement. Also, saturation variations between frames of a moving picture displayed on hardware, which may occur during data transmission, or between TV channels, can be automatically equalized to maintain a constant saturation level.

In addition, the saturation adjusting apparatus according to the present detects a test pattern image to bypass saturation adjustment on the test pattern image invention, and thus to control the quality of the test pattern image displayed on a display apparatus. It is also determined whether an input pixel belongs to a skin color region, and the saturation adjustment is performed only on the other color region, such as a background image, to suppress an excess increase in the saturation of the skin color.

A gain value obtained from the input image information is applied only to the color signals Cb and Cr of the image to selectively adjust the saturation of the input image while the brightness of the input image is maintained. Since the gain value is calculated in consideration of the saturation value of each pixel, an unnecessary gamut-mappint block can be eliminated to prevent saturation distortion and to construct simple system hardware. A gain value for a gray image is adaptively reduced to maintain gray-balance.

**Claims**

1. An apparatus for adjusting the saturation of a color image, comprising:

   a saturation calculator (120, 920) which calculates a saturation value for each of pixels of an input image;
   a peak saturation calculator (140,940) which determines a peak saturation value of the input image using saturation values calculated by the saturation calculator;
   a peak gain calculator (150, 950) which calculates a peak gain value, wherein the peak gain value is a gain value calculated by using the peak saturation value determined by the peak saturation calculator;
   a pattern gain calculator (180, 980) which determines whether or not the input image is a predetermined pattern image and calculates a pattern gain value for the predetermined pattern image depending on whether the input image is determined as the predetermined pattern image, wherein the pattern gain calculator calculates the absolute value of a pixel count difference between adjacent saturation regions and an average of the calculated absolute values for all saturation regions of the input image and calculates the pattern gain value using the calculated average of the absolute values; and
   a saturation adjustor (170, 970) which adaptively adjusts the saturation of the input image using the peak gain value calculated by the peak gain calculator, wherein the saturation adjustor adjusts the saturation of the input image using additionally the pattern gain value calculated by the pattern gain calculator.

2. The apparatus of claim 1, further comprising a histogram calculator (130, 930) which calculates a saturation histogram of the input image using the saturation values calculated by the saturation calculator, wherein the peak saturation calculator determines the peak saturation value from the saturation histogram calculated by the histogram calculator.

3. The apparatus of claim 1 or 2, wherein the saturation calculator converts an input image signal into an RGB signal and calculates the saturation for each of the pixels as a ratio of the difference between maximum and minimum values of the RGB signal to the sum of the maximum and minimum values of the RGB signal.

4. The apparatus of claim 3, wherein the input image signal input to the saturation calculator is one of YCbCr, YUV, and YIQ signals.

5. The apparatus of claim 3 or 4, wherein when the maximum value of the RGB signal for the input image signal processed by the saturation calculator is less than a predetermined value or is greater than or equal to another predetermined value, the maximum value of the input image signal is not accumulated to calculate the saturation histogram.

6. The apparatus of any of claims 1 to 5, further comprising:

   a mean saturation calculator (942) which calculates a mean saturation value of the input image using the saturation values calculated by the saturation calculator; and
   a mean gain calculator (952) which calculates a mean gain value, wherein the mean gain value is a gain value calculated by using the mean saturation value calculated by the mean saturation calculator,

   wherein the saturation adjustor calculates a local gain value for each of the pixels using the mean gain value calculated by the mean gain calculator and the saturation values calculated by the saturation calculator and adaptively adjusts the saturation of each of the pixels of the input image using the local gain value, the pattern gain value and the peak gain value.

7. The apparatus of any of claims 1 to 6, wherein the peak gain calculator calculates a peak gain value for a peak saturation value smaller than or equal to a first saturation value and for a peak saturation value greater than or equal to a second saturation value, wherein the second saturation value is greater than the first saturation value, to be smaller than that for a peak saturation value between the first and second saturation values.

8. The apparatus of any of claims 1 to 7, wherein the peak saturation calculator determines a saturation value of the pixels corresponding to a predetermined percentage of the total number of pixels from the pixel having the largest saturation value, as the peak saturation value.

9. The apparatus of any of claims 1 to 8, wherein the saturation adjustor adaptively adjusts the saturation of the input image further in consideration of at least one of a system gain value and a user gain value, wherein the system gain value controls degrees of the color image enhancement.

10. The apparatus of claim 1, wherein the predetermined pattern image is a test pattern image.

11. The apparatus of any of claims 1 to 10, further comprising:

a color gain calculator (190, 990) which determines whether each of the pixels of the input image belongs to a predetermined color region and calculates a color gain value for a pixel depending on whether the pixel belongs to the predetermined color region,

wherein the saturation adjustor adaptively adjusts the saturation for each of the pixels of the input image using the peak gain value calculated by the peak gain calculator, the pattern gain value calculated by the pattern gain calculator and the color gain value calculated by the color gain calculator.

12. The apparatus of claim 11, wherein the pattern gain calculator determines the input image as the predetermined pattern image if the average of the absolute values is greater than a first threshold, determines the input image as a natural image if the average of the absolute values is smaller than a second threshold, and outputs the pattern gain value corresponding to the input image.

13. The apparatus of any of claims 11 or 12, wherein the predetermined color region is a skin color region.

14. The apparatus of any of claims 11 to 13, wherein the color gain calculator determines whether or not an input pixel belongs to the skin color region by using a 3-dimensional ellipsoidal equation having a mean color value of the skin color region as the center coordinate of the ellipsoid and race- or system-dependent skin color variations as radii of three axes of the ellipsoid and outputs the color gain value according to the result of the determination.

15. The apparatus of any of claims 11 to 14, wherein the color gain calculator determines whether an input pixel belongs to the predetermined color region by using color gain functions for Y, Cb, and Cr values of the input pixel and calculates a color gain value for a YCbCr value of the input pixel.

16. The apparatus of any of claims 11 to 15 when referring to any of claims 6 to 14, wherein the mean gain calculator calculates a mean gain value for a mean saturation value smaller than or equal to a first saturation value and for a mean saturation value greater than or equal to a second saturation value, wherein the second saturation value is greater than the first saturation value, to be smaller than that for a mean saturation value between the first and second saturation values.

17. The apparatus of any of claims 11 to 16 when referring to any of claims 6 to 15, wherein the saturation adjustor calculates a local gain value for a saturation value smaller than or equal to a first saturation value and for a saturation value greater than or equal to a second saturation value, wherein the second saturation value is greater than the first saturation value, to be smaller than that for a saturation value between the first and second saturation values.

18. The apparatus of any of claims 11 to 17 when referring to any of claims 2 to 16, wherein the histogram calculator selectively calculates a saturation histogram for the entire frame of the input image or a saturation histogram for pixels in a predetermined window region of the input image.

19. An apparatus for adjusting the saturation of a color image, comprising:

a saturation calculator (120, 920) which calculates a saturation value for each of pixels of an input image; a mean saturation calculator (942) which calculates a mean saturation value of the input image using saturation values calculated by the saturation calculator; a mean gain calculator (952) which calculates a mean gain value, wherein the mean gain value is a gain value calculated by using the mean saturation value calculated by the mean saturation calculator; a pattern gain calculator (180, 980) which determines whether or not the input image is a predetermined pattern image and calculates a pattern gain value depending on whether the input image is determined as the predetermined pattern image, wherein the pattern gain calculator calculates the absolute value of a pixel count difference between adjacent saturation regions and an average of the absolute values for all saturation regions of the input image and calculates the pattern gain value using the average of the absolute values; and a saturation adjustor (170, 970) which calculates a local gain value for each of the pixels using the mean gain value calculated by the mean gain calculator and the saturation values calculated by the saturation calculator and adaptively adjusts the saturation of each of the pixels of the input image using the local gain value, wherein the saturation adjustor adaptively adjusts the saturation of each of the pixels of the input image using additionally the pattern gain value calculated by the pattern gain calculator.

20. The apparatus of claim 19, further comprising a histogram calculator (130, 930) which calculates a saturation histogram of the input image using the saturation values calculated by the saturation calculator, wherein the mean saturation calculator calculate the mean saturation value from the saturation histogram calculated by the histogram calculator.

21. The apparatus of claim 19 or 20, wherein the saturation calculator converts an input image signal into an RGB signal and calculates the saturation for each of the pixels as a ratio of the difference between maximum and minimum values of the RGB signal to the sum of the maximum and minimum values of the RGB signal.

22. The apparatus of any of claims 19 to 21, wherein the mean gain calculator calculates a mean gain value for a mean saturation value smaller than or equal to a first saturation value and for a mean saturation value greater than or equal to a second saturation value, wherein the second saturation value is greater than the first saturation value, to be smaller than that for a mean saturation value between the first and second saturation values.

23. The apparatus of any of claims 19 to 22, wherein the saturation adjustor calculates a local gain value for a saturation value smaller than or equal to a first saturation value and for a saturation value greater than or equal to a second saturation value, wherein the second saturation value is greater than the first saturation value, to be smaller than that for a saturation value between the first and second saturation values.

24. The apparatus of any of claims 19 to 23, wherein the saturation adjustor adaptively adjusts the saturation of the input image further in consideration of at least one of a system gain value and a user gain value, wherein the system gain value controls degrees of the color image enhancement.

25. The apparatus of any of claims 19 to 24, wherein the input image signal input to the saturation calculator is one of YCbCr, YUV, and YIQ signals.

26. The apparatus of any of claims 19 to 25, wherein when the maximum value of the RGB signal for the input image signal processed by the saturation calculator is less than a predetermined value or is greater than or equal to another predetermined value, the maximum value of the input image signal is not accumulated to calculate the saturation histogram.

27. The apparatus of claim 19, wherein the predetermined pattern image is a test pattern image.

28. The apparatus of claim 19 or 27, wherein the mean gain calculator calculates a mean gain value for a mean saturation value smaller than or equal to a first saturation value and for a mean saturation value greater than or equal to a second saturation value, wherein the second saturation value is greater than the first saturation value, to be smaller than that for a mean saturation value between the first and second saturation values.

29. The apparatus of any of claims 19 to 28, further comprising:

a color gain calculator (190,990) which determines whether each of the pixels of the input image belongs to a predetermined color region and calculates a color gain value for a pixel depending on whether the pixel belongs to the predetermined color region,

wherein the saturation adjustor adaptively adjusts the saturation of each of the pixels of the input image using additionally the color gain value calculated by the color gain calculator.

30. The apparatus of claim 29, wherein the pattern gain calculator determines the input image as the predetermined pattern image if the average of the absolute values is greater than a first threshold, determines the input image as a natural image if the average of the absolute values is smaller than a second threshold, and outputs the pattern gain value corresponding to the input image.

31. The apparatus of claim 29 or 30, wherein the predetermined color region is a skin color region.

32. The apparatus of any of claims 29 to 31, wherein the color gain calculator determines whether or not an input pixel belongs to the skin color region by using a 3-dimensional ellipsoidal equation having a mean color value of the skin color region as the center coordinate of the ellipsoid and race- or system-dependent skin color variations as radii of three axes of the ellipsoid and outputs the color gain value according to the result of the determination.

33. The apparatus of any of claims 29 to 32, wherein the color gain calculator determines whether an input pixel belongs to the predetermined color region by using color gain functions for Y, Cb, and Cr values of the input pixel and calculates a color gain value for a YCbCr value of the input pixel.

34. The apparatus of any of claims 29 to 33, wherein the largest value among the local gain values for the pixels is equal to the mean gain value calculated by the mean gain calculator.

35. The apparatus of any of claims 29 to 34 when referring to any of claims 20 to 33, wherein the histogram calculator selectively calculates a saturation histogram for the entire frame of the input image or a saturation histogram for pixels in a predetermined window region of the input image.

36. The apparatus of any of claims 19 to 35, further comprising:

a peak saturation calculator (140, 940) which determines a peak saturation value of the input image using saturation values calculated by the saturation calculator;
a peak gain calculator (150, 950) which calculates a peak gain value, wherein the peak gain value is a gain value calculated by using the peak saturation value determined by the peak saturation calculator;

wherein the saturation adjustor calculates the local gain value for each of the pixels using additionally the saturation values calculated by the saturation calculator and adaptively adjusts the saturation of each of the pixels of the input image using additionally the peak gain value calculated by the peak gain calculator.

37. A display comprising the apparatus of any of claims 1 to 36.

38. A digital TV comprising the display of claim 37.

39. A digital camera comprising the display of claim 37.

40. A camcorder comprising the display of claim 37.

41. An image processor comprising the apparatus of any of claims 1 to 36.

42. A method for adjusting the saturation of a color image, comprising:

(a) calculating a saturation value for each of pixels of an input image;
(b) determining a peak saturation value of the input image based on saturation values calculated in (a);
(c) calculating a peak gain value, wherein the peak gain value is a gain value calculated by using the peak saturation value determined in (b);
(c1) determining whether or not the input image is a predetermined pattern image and calculating a pattern gain value depending on whether the input image is determined as the predetermined pattern image, wherein the absolute value of a pixel count difference between adjacent saturation regions and an average of the calculated absolute values for all saturation regions of the input image are calculated and the pattern gain value is calculated using the calculated average of the absolute values; and
(d) adaptively adjusting the saturation of the input image using the peak gain value calculated in (c), wherein in step (d) additionally the pattern gain value determined in (c1) is used for adaptively adjusting the saturation of the input image.

43. The method of claim 42, further comprising:

(b1) calculating a mean saturation value of the input image using the saturation values calculated in (a); and
(c2) calculates a mean gain value, wherein the mean gain value is a gain value calculated by using the mean saturation value calculated in (b1),

wherein in (d), a local gain value for each of the pixels is calculated using the mean gain value calculated in (c2) and the saturation values calculated in (a), and the saturation of each of the pixels of the input image is adaptively adjusted further in consideration of the local gain value.

**44.** The method of claim 42 or 43, further comprising:

(c3) determining whether each of the pixels of the input image belongs to a predetermined color region and calculating a color gain value for a pixel depending on whether the pixel belongs to the predetermined color region,

wherein in step (d) additionally the color gain value calculated in (c3) is used for adaptively adjusting the saturation of the input image.

**45.** A method for adjusting the saturation of a color image, comprising:

(a) calculating a saturation value for each of pixels of an input image;
(b1) calculating a mean saturation value of the input image using saturation values calculated in (a);
(c1) calculating a mean gain value, wherein the mean gain value is a gain value calculated by using the mean saturation value calculated in (b1);
(c2) determining whether or not the input image is a predetermined pattern image and calculating a pattern gain value depending on whether the input image is determined as the predetermined pattern image, wherein the absolute value of a pixel count difference between adjacent saturation regions and an average of the calculated absolute values for all saturation regions of the input image are calculated and the pattern gain value is calculated using the calculated average of the absolute values; and
(d) calculating a local gain value for each of the pixels using the mean gain value calculated in (c1) and the saturation values calculated in (a) and adaptively adjusting the saturation of each of the pixels of the input image using the local gain value,

wherein in step (d) additionally the pattern gain value calculated in (c2) is used for adaptively adjusting the saturation of each of the pixels of the input image.

**46.** The method of claim 45, further comprising:

(c3) determining whether each of the pixels of the input image belongs to a predetermined color region and calculating a color gain value for a pixel depending on whether the pixel belongs to the predetermined color region,

wherein in step (d) additionally the color gain value calculated in (c3) is used for adaptively adjusting the saturation of each of the pixels of the input image.

**Patentansprüche**

**1.** Vorrichtung zum Regulieren der Sättigung eines Farbbildes, die umfasst:

eine Sättigungs-Berechnungseinrichtung (120, 920), die einen Sättigungswert für jedes Pixel eines Eingabebildes berechnet;
eine Spitzensättigungs-Berechnungseinrichtung (140, 940), die einen Sättigungs-Spitzenwert des Eingabebildes unter Verwendung von durch die Sättigungs-Berechnungseinrichtung berechneten Sättigungswerten bestimmt;
eine Spitzenverstärkungs-Berechnungseinrichtung (150, 950), die einen Verstärkungs-Spitzenwert berechnet, wobei der Verstärkungs-Spitzenwert ein Verstärkungswert ist, der unter Verwendung des durch die Spitzensättigungs-Berechnungseinrichtung bestimmten Sättigungs-Spitzenwertes berechnet wird;
eine Musterverstärkungs-Berechnungseinrichtung (180, 980), die bestimmt, ob das Eingabebild ein Bild mit vorgegebenem Muster ist oder nicht und einen Musterverstärkungswert für das Bild mit vorgegebenem Muster in Abhängigkeit davon berechnet, ob das Eingabebild als das Bild mit vorgegebenem Muster bestimmt wird, wobei die Musterverstärkungs-Berechnungseinrichtung den Absolutwert einer PixelzählwertDifferenz zwischen aneinandergrenzenden Sättigungsbereichen und einen Durchschnitt der berechneten Absolutwerte für alle Sättigungsbereiche des Eingabebildes berechnet und den Musterverstärkungswert unter Verwendung des berechneten Durchschnitts der Absolutwerte berechnet; und

eine Sättigungs-Reguliereinrichtung (170, 970), die die Sättigung des Eingabebildes unter Verwendung des durch die Spitzenverstärkungs-Berechnungseinrichtung berechneten Verstärkungs-Spitzenwertes adaptiv reguliert, wobei die Sättigungs-Reguliereinrichtung die Sättigung des Eingabebildes unter zusätzlicher Verwendung des durch die Musterverstärkungs-Berechnungseinrichtung berechneten Musterverstärkungswertes reguliert.

2. Vorrichtung nach Anspruch 1, die des Weiteren eine Histogramm-Berechnungseinrichtung (130, 930) umfasst, die ein Sättigungs-Histogramm des Eingabebildes unter Verwendung der durch die Sättigungs-Berechnungseinrichtung berechneten Sättigungswerte berechnet, wobei die Spitzensättigungs-Berechnungseinrichtung den Sättigungs-Spitzenwert aus dem durch die Histogramm-Berechnungseinrichtung berechneten Sättigungs-Histogramm bestimmt.

3. Vorrichtung nach Anspruch 1 oder 2, wobei die Sättigungs-Berechnungseinrichtung ein Eingabebildsignal in ein RGB-Signal umwandelt und die Sättigung für jedes der Pixel als ein Verhältnis der Differenz zwischen Maximal- und Minimalwerten des RGB-Signals zu der Summe der Maximal- und Minimalwerte des RGB-Signals berechnet.

4. Vorrichtung nach Anspruch 3, wobei es sich bei dem in die Sättigungs-Berechnungseinrichtung eingegebenen Bildsignal um YCbCr-, YUV- oder YIQ-Signale handelt.

5. Vorrichtung nach Anspruch 3 oder 4, wobei, wenn der Maximalwert des RGB-Signals für das durch die Sättigungs-Berechnungseinrichtung verarbeitete Eingabebildsignal kleiner ist als ein vorgegebener Wert oder größer ist als oder genauso groß wie ein anderer vorgegebener Wert, der Maximalwert des Eingabebildsignals nicht zum Berechnen des Sättigungs-Histogramms akkumuliert wird.

6. Vorrichtung nach einem der Ansprüche 1 bis 5, die des Weiteren umfasst:

   eine Einrichtung (942) zum Berechnen mittlerer Sättigung, die einen Sättigungs-Mittelwert des Eingabebildes unter Verwendung der durch die Sättigungs-Berechnungseinrichtung berechneten Sättigungswerte berechnet; und

   eine Einrichtung (952) zum Berechnen mittlerer Verstärkung, die einen Verstärkungs-Mittelwert berechnet, wobei der Verstärkungs-Mittelwert ein Verstärkungswert ist, der unter Verwendung des durch die Einrichtung zum Berechnen mittlerer Sättigung berechneten Sättigungs-Mittelwertes berechnet wird,

   wobei die Sättigungs-Reguliereinrichtung einen lokalen Verstärkungswert für jedes der Pixel unter Verwendung des durch die Einrichtung zum berechnen mittlerer Verstärkung berechneten Verstärkungs-Mittelwertes und der durch die Sättigungs-Berechnungseinrichtung berechneten Sättigungswerte berechnet und die Sättigung jedes der Pixel des Eingabebildes unter Verwendung des lokalen Verstärkungswertes, des Musterverstärkungswertes und des Verstärkungs-Spitzenwertes adaptiv reguliert.

7. Vorrichtung nach einem der Ansprüche 1 bis 6, wobei die Einrichtung einen Verstärkungs-Spitzenwert für einen Sättigungs-Spitzenwert, der kleiner ist als oder genauso groß wie ein erster Sättigungswert, und für einen Sättigungs-Spitzenwert, der größer ist als oder genauso groß wie ein zweiter Sättigungswert, so berechnet, dass er kleiner ist als der für einen Sättigungs-Spitzenwert zwischen dem ersten und dem zweiten Sättigungswert, wobei der zweite Sättigungswert größer ist als der erste Sättigungswert

8. Vorrichtung nach einem der Ansprüche 1 bis 7, wobei die Spitzensättigungs-Berechnungseinrichtung einen Sättigungswert der Pixel, die einem vorgegebenen Prozentsatz der Gesamtzahl von Pixeln entsprechen, anhand des Pixels mit dem größten Sättigungswert als den Sättigungs-Spitzenwert bestimmt.

9. Vorrichtung nach einem der Ansprüche 1 bis 8, wobei die Sättigungs-Reguliereinrichtung die Sättigung des Eingabebildes des Weiteren unter Berücksichtigung wenigstens eines Systemverstärkungswertes oder eines Benutzerverstärkungswertes adaptiv reguliert, wobei der Systemverstärkungswert Grade der Farbbildverbesserung steuert.

10. Vorrichtung nach Anspruch 1, wobei das vorgegebene Musterbild ein Testmusterbild ist.

11. Vorrichtung nach einem der Ansprüche 1 bis 10, die des Weiteren umfasst:

    eine Farbverstärkungs-Berechnungseinrichtung (190, 990), die bestimmt, ob jedes der Pixel des Eingabebildes zu einem vorgegebenen Farbbereich gehört, und einen Farbverstärkungswert für ein Pixel in Abhängigkeit davon berechnet, ob das Pixel zu dem vorgegebenen Farbbereich gehört,

wobei die Sättigungs-Reguliereinrichtung die Sättigung für jedes der Pixel des Eingabebildes unter Verwendung des durch die Spitzenverstärkungs-Berechnungseinrichtung berechneten Verstärkungs-Spitzenwertes, des durch die Musterverstärkungs-Berechnungseinrichtung berechneten Musterverstärkungswertes und des durch die Farbverstärkungs-Berechnungseinrichtung berechneten Farbverstärkungswertes adaptiv reguliert.

12. Vorrichtung nach Anspruch 11, wobei die Musterverstärkungs-Berechnungseinrichtung das Eingabebild als das vorgegebene Musterbild bestimmt, wenn der Durchschnitt der Absolutwerte größer ist als ein erster Schwellenwert, das Eingabebild als ein natürliches Bild bestimmt, wenn der Durchschnitt der Absolutwerte kleiner ist als ein zweiter Schwellenwert, und den Musterverstärkungswert ausgibt, der dem Eingabebild entspricht.

13. Vorrichtung nach einem der Ansprüche 11 oder 12, wobei der vorgegebene Farbbereich ein Hautfarbbereich ist.

14. Vorrichtung nach einem der Ansprüche 11 bis 13, wobei die Farbverstärkungs-Berechnungseinrichtung unter Verwendung einer dreidimensionalen ellipsoidischen Gleichung mit einem mittleren Farbwert des Hautfarbbereiches als der Mittelkoordinate des Ellipsoids und von Rasse oder Organismus abhängigen Hautfarbabweichungen als Radien von drei Achsen des Ellipsoids bestimmt, ob ein Eingabepixel zu dem Hautfarbbereich gehört oder nicht und den Farbverstärkungswert entsprechend dem Ergebnis der Bestimmung ausgibt.

15. Vorrichtung nach einem der Ansprüche 11 bis 14, wobei die Farbverstärkungs-Berechnungseinrichtung unter Verwendung von Farbverstärkungsfunktionen für Y-, Cb- und Cr-Werte der Eingabepixel bestimmt, ob ein Eingabepixel zu dem vorgegebenen Farbbereich gehört, und einen Farbverstärkungswert für einen YCbCr-Wert des Eingabepixels berechnet.

16. Vorrichtung nach einem der Ansprüche 11 bis 15, wenn bezogen auf einen der Ansprüche 6 bis 14, wobei die Einrichtung zum Berechnen mittlerer Verstärkung einen Verstärkungs-Mittelwert für einen Sättigungs-Mittelwert, der kleiner ist als oder genauso groß wie ein erster Sättigungswert, und für einen Sättigungs-Mittelwert, der größer ist als oder genauso groß wie ein zweiter Sättigungswert, so berechnet, dass er kleiner ist als der für einen Sättigungs-Mittelwert zwischen dem ersten und dem zweiten Sättigungswert, wobei der zweite Sättigungswert größer ist als der erste Sättigungswert.

17. Vorrichtung nach einem der Ansprüche 11 bis 16, wenn bezogen auf einen der Ansprüche 6 bis 15, wobei die Sättigungs-Reguliereinrichtung einen lokalen Verstärkungswert für einen Sättigungswert, der kleiner ist als oder genauso groß ist wie ein erster Sättigungswert, und für einen Sättigungswert, der größer ist als oder genauso groß wie ein zweiter Sättigungswert, so berechnet, dass er kleiner ist als der für einen Sättigungswert zwischen dem ersten und dem zweiten Sättigungswert, wobei der zweite Sättigungswert größer ist als der erste Sättigungswert.

18. Vorrichtung nach einem der Ansprüche 11 bis 17, wenn bezogen auf einen der Ansprüche 2 bis 16, wobei die Histogramm-Berechnungseinrichtung selektiv ein Sättigungs-Histogramm für das gesamte Vollbild des Eingabebildes oder ein Sättigungs-Histogramm für Pixel in einem vorgegebenen Fensterbereich des Eingabebildes berechnet.

19. Vorrichtung zum Regulieren der Sättigung eines Farbbildes, die umfasst:

   eine Sättigungs-Berechnungseinrichtung (120, 920), die einen Sättigungswert für jedes Pixel eines Eingabebildes berechnet;
   eine Einrichtung (942) zum Berechnen mittlerer Sättigung, die einen Sättigungs-Mittelwert des Eingabebildes unter Verwendung von durch die Sättigungs-Berechnungseinrichtung berechneten Sättigungswerten berechnet;
   eine Einrichtung (952) zum Berechnen mittlerer Verstärkung, die einen Verstärkungs-Mittelwert berechnet, wobei der Verstärkungs-Mittelwert ein Verstärkungswert ist, der unter Verwendung der durch die Einrichtung zum Berechnen mittlerer Sättigung berechneten Sättigungs-Mittelwerte berechnet wird;
   eine Musterverstärkungs-Berechnungseinrichtung (180, 980), die bestimmt, ob das Eingabebild ein vorgegebenes Musterbild ist oder nicht, und einen Musterverstärkungswert in Abhängigkeit davon berechnet, ob das Eingabebild als das vorgegebene Musterbild bestimmt wird, wobei die Musterverstärkungs-Berechnungseinrichtung den Absolutwert einer Pixelzahl-Differenz zwischen aneinandergrenzenden Sättigungsbereichen und einen Durchschnitt der Absolutwerte für alle Sättigungsbereiche des Eingabebildes berechnet und den Musterverstärkungswert unter Verwendung des Durchschnitts der Absolutwerte berechnet; und
eine Sättigungsregeliereinrichtung (170, 970), die einen lokalen Verstärkungswert für jedes der Pixel unter Verwendung des durch die Einrichtung zum Berechnen mittlerer Verstärkung berechneten Verstärkungs-Mittelwertes und der durch die Sättigungs-Berechnungseinrichtung berechneten Sättigungswerte berechnet und die Sättigung jedes der Pixel des Eingabebildes unter Verwendung des lokalen Verstärkungswertes adaptiv reguliert, wobei die Sättigungs-Reguliereinrichtung die Sättigung jedes der Pixel des Eingabebildes zusätzlich unter Verwendung des durch die Musterverstärkungs-Berechnungseinrichtung berechneten Musterverstärkungswertes adaptiv reguliert.

**20.** Vorrichtung nach Anspruch 19, die des Weiteren eine Histogramm-Berechnungseinrichtung (130, 930) umfasst, die ein Sättigungs-Histogramm des Eingabebildes unter Verwendung der durch die Sättigungs-Berechnungseinrichtung berechneten Sättigungswerte berechnet, wobei die Einrichtung zum Berechnen mittlerer Sättigung den Sättigungs-Mittelwert anhand des durch die Histogramm-Berechnungseinrichtung berechneten Sättigungs-Histogramms berechnet.

**21.** Vorrichtung nach Anspruch 19 oder 20, wobei die Sättigungs-Berechnungseinrichtung ein Eingabebildsignal in ein RGB-Signal umwandelt und die Sättigung für jedes der Pixel als ein Verhältnis der Differenz zwischen Maximal- und Minimalwerten des RGB-Signals zu der Summe der Maximal- und Minimalwerte des RGB-Signals berechnet.

**22.** Vorrichtung nach einem der Ansprüche 19 bis 21, wobei die Einrichtung zum Berechnen mittlerer Verstärkung einen Verstärkungs-Mittelwert für eine Sättigungs-Mittelwert, der kleiner als oder genauso groß wie ein erster Sättigungswert, und für einen Sättigungs-Mittelwert, der größer ist als oder genauso groß wie ein zweiter Sättigungswert, so berechnet, dass er kleiner ist als der für einen Sättigungs-Mittelwert zwischen dem ersten und dem zweiten Sättigungswert, wobei der zweite Sättigungswert größer ist als der erste Sättigungswert.

**23.** Vorrichtung nach einem der Ansprüche 19 bis 22, wobei die Sättigungs-Reguliereinrichtung einen lokalen Verstärkungswert für einen Sättigungswert, der kleiner ist als oder genauso groß wie ein erster Sättigungswert, und für einen Sättigungswert, der größer ist als oder genauso groß wie ein zweiter Sättigungswert, so berechnet, dass er kleiner ist als der für einen Sättigungswert zwischen dem ersten und dem zweiten Sättigungswert, wobei der zweite Sättigungswert größer ist als der erste Sättigungswert.

**24.** Vorrichtung nach einem der Ansprüche 19 bis 23, wobei die Sättigungs-Reguliereinrichtung die Sättigung des Eingabebildes des Weiteren unter Berücksichtigung wenigstens eines Systemverstärkungswertes oder eines Benutzerverstärkungswertes adaptiv reguliert, und der Systemverstärkungswert Grade der Farbbildverbesserung steuert.

**25.** Vorrichtung nach einem der Ansprüche 19 bis 24, wobei es sich bei dem in die Sättigungs-Berechnungseinrichtung eingegebenen Eingabe-Bildsignal um YCbCr-, YUV-oder YIQ-Signale handelt.

**26.** Vorrichtung nach einem der Ansprüche 19 bis 25, wobei, wenn der Maximalwert des RGB-Signals für das durch die Sättigungs-Berechnungseinrichtung verarbeitete Eingabebildsignal kleiner ist als ein vorgegebener Wert oder größer ist als oder genauso groß wie ein anderer vorgegebener Wert, der Maximalwert des Eingabebildsignals nicht zum Berechnen des Sättigungs-Histogramms akkumuliert wird.

**27.** Vorrichtung nach Anspruch 19, wobei das vorgegebene Musterbild ein Testmusterbild ist.

**28.** Vorrichtung nach Anspruch 19 oder 27, wobei die Einrichtung zum Berechnen mittlerer Verstärkung einen Verstärkungs-Mittelwert für einen Sättigungs-Mittelwert, der kleiner ist als oder genauso groß wie ein erster Sättigungswert, und für einen Sättigungs-Mittelwert, der größer ist als oder genauso groß wie ein zweiter Sättigungswert, so berechnet, dass er kleiner ist als der für einen Sättigungs-Mittelwert zwischen dem ersten und dem zweiten Sättigungswert, wobei der zweite Sättigungswert größer ist als der erste Sättigungswert.

**29.** Vorrichtung nach einem der Ansprüche 19 bis 28, die des Weiteren umfasst:

eine Farbverstärkungs-Berechnungseinrichtung (190, 990), die bestimmt, ob jedes der Pixel des Eingabebildes zu einem vorgegebenen Farbbereich gehört, und einen Farbverstärkungswert für ein Pixel in Abhängigkeit davon berechnet, ob das Pixel zu dem vorgegebenen Farbbereich gehört,

wobei die Sättigungs-Reguliereinrichtung die Sättigung jedes der Pixel des Eingabebildes zusätzlich unter Verwendung des durch die Farbverstärkungs-Berechnungseinrichtung berechneten Farbverstärkungswertes adaptiv reguliert.

30. Vorrichtung nach Anspruch 29, wobei die Musterverstärkungs-Berechnungseinrichtung das Eingabebild als das vorgegebene Musterbild bestimmt, wenn der Durchschnitt der Absolutwerte größer ist als ein erster Schwellenwert, das Eingabebild als ein natürliches Bild bestimmt, wenn der Durchschnitt der Absolutwerte kleiner ist als ein zweiter Schwellenwert, und den Musterverstärkungswert ausgibt, der dem Eingabebild entspricht.

31. Vorrichtung nach Anspruch 29 oder 30, wobei der vorgegebene Farbbereich ein Hautfarbbereich ist.

32. Vorrichtung nach einem der Ansprüche 29 bis 31, wobei die Farbverstärkungs-Berechnungseinrichtung unter Verwendung einer dreidimensionalen ellipsoidischen Gleichung mit einem mittleren Farbwert des Hautfarbbereiches als der Mittelkoordinate des Ellipsoids und von Rasse oder Organismus abhängigen Hautfarbabweichungen als Radien von drei Achsen des Ellipsoids bestimmt, ob ein Eingabepixel zu dem Hautfarbbereich gehört oder nicht, und den Farbverstärkungswert entsprechend dem Ergebnis der Bestimmung ausgibt.

33. Vorrichtung nach einem der Ansprüche 29 bis 32, wobei die Farbverstärkungs-Berechnungseinrichtung unter Verwendung von Farbverstärkungsfunktionen für Y-, Cb- und Cr-Werte der Eingabepixel bestimmt, ob ein Eingabepixel zu dem vorgegebenen Farbbereich gehört, und einen Farbverstärkungswert für einen YCbCr-Wert des Eingabepixels berechnet.

34. Vorrichtung nach einem der Ansprüche 29 bis 33, wobei der größte Wert unter den lokalen Verstärkungswerten für die Pixel genauso groß ist wie der durch die Einrichtung zum Berechnen mittlerer Verstärkung berechnete Verstärkungs-Mittelwert.

35. Vorrichtung nach einem der Ansprüche 29 bis 34, wenn bezogen auf einen der Ansprüche 20 bis 33, wobei die Histogramm-Berechnungseinrichtung selektiv ein Sättigungs-Histogramm für das gesamte Vollbild des Eingabebildes oder ein Sättigungs-Histogramm für Pixel in einem vorgegebenen Fensterbereich des Eingabebildes berechnet.

36. Vorrichtung nach einem der Ansprüche 19 bis 35, die des weiteren umfasst:

   eine Spitzensättigungs-Berechnungseinrichtung (140, 940), die einen Sättigungs-Spitzenwert des Eingabebildes unter Verwendung von durch die Sättigungs-Berechnungseinrichtung berechneten Sättigungswerten bestimmt;
   eine Spitzenverstärkungs-Berechnungseinrichtung (150, 950), die einen Verstärkungs-Spitzenwert berechnet, wobei der Spitzenverstärkungswert ein Verstärkungswert ist, der unter Verwendung des durch die Spitzensättigungs-Berechnungseinrichtung bestimmten Sättigungs-Spitzenwertes berechnet wird;

wobei die Sättigungs-Reguliereinrichtung den lokalen Verstärkungswert für jedes der Pixel zusätzlich unter Verwendung der durch die Sättigungs-Berechnungseinrichtung berechneten Sättigungswerte berechnet und die Sättigung jedes der Pixel des Eingabebildes zusätzlich unter Verwendung des durch die Spitzenverstärkungs-Berechnungseinrichtung berechneten Verstärkungs-Spitzenwertes adaptiv reguliert.

37. Anzeigevorrichtung, die die Vorrichtung nach einem der Ansprüche 1 bis 36 umfasst.

38. Digitaler Fernseher, der die Anzeigevorrichtung nach Anspruch 37 umfasst.

39. Digitalkamera, die die Anzeigevorrichtung nach Anspruch 37 umfasst.

40. Camcorder, der die Anzeigevorrichtung nach Anspruch 37 umfasst.

41. Bildverarbeitungsvorrichtung, die die Vorrichtung nach einem der Ansprüche 1 bis 36 umfasst.

42. Verfahren zum Regulieren der Sättigung eines Farbbildes, das umfasst:

   (a) Berechnen eines Sättigungswertes für jedes Pixel eines Eingabebildes;
   (b) Bestimmen eines Sättigungs-Spitzenwertes des Eingabebildes auf Basis in (a) berechneter Sättigungswerte;

(c) Berechnen eines Verstärkungs-Spitzenwertes, wobei der Spitzenverstärkungswert ein Verstärkungswert ist, der unter Verwendung des in (b) bestimmten Sättigungs-Spitzenwertes berechnet wird;

(c1) Bestimmen, ob das Eingabebild ein vorgegebenes Musterbild ist oder nicht, und Berechnen eines Musterverstärkungswertes in Abhängigkeit davon, ob das Eingabebild als das vorgegebene Musterbild bestimmt wird, wobei der Absolutwert einer Pixelzahlwert-Differenz zwischen aneinandergrenzenden Sättigungsbereichen und ein Durchschnitt der für alle Sättigungsbereiche des Eingabebildes berechneten Absolutwerte berechnet werden und der Musterverstärkungswert unter Verwendung des berechneten Durchschnitts der Absolutwerte berechnet wird; und

(d) adaptives Regulieren der Sättigung des Eingabebildes unter Verwendung des in (c) berechneten Spitzenverstärkungswertes, wobei in Schritt (d) zusätzlich der in (c1) bestimmte Musterverstärkungswert zum adaptiven Regulieren der Sättigung des Eingabebildes verwendet wird.

**43.** Verfahren nach Anspruch 42, der des Weiteren umfasst:

(b1) Berechnen eines Sättigungs-Mittelwertes des Eingabebildes unter Verwendung der in (a) berechneten Sättigungswerte; und

(c2) Berechnen eines Verstärkungs-Mittelwertes, wobei der Verstärkungs-Mittelwert ein Verstärkungswert ist, der unter Verwendung des in (b1) berechneten Sättigungs-Mittelwertes berechnet wird;

wobei in (d) ein lokaler Verstärkungswert für jedes der Pixel unter Verwendung des in (c2) berechneten Verstärkungs-Mittelwertes und der in (a) berechneten Sättigungswerte berechnet wird und die Sättigung jedes der Pixel des Eingabebildes unter Berücksichtigung des lokalen Verstärkungswertes weiter adaptiv reguliert wird.

**44.** Verfahren nach Anspruch 42 oder 43, das des Weiteren umfasst:

(c3) Bestimmen, ob jedes der Pixel des Eingabebildes zu einem vorgegebenen Farbbereich gehört und Berechnen eines Farbverstärkungswertes für ein Pixel in Abhängigkeit davon, ob das Pixel zu dem vorgegebenen Farbbereich gehört,

wobei in Schritt (d) zusätzlich der in (c3) berechnete Farbverstärkungswert verwendet wird, um die Sättigung des Eingabebildes adaptiv zu regulieren.

**45.** Verfahren zum Regulieren der Sättigung eines Farbbildes, das umfasst:

(a) Berechnen eines Sättigungswertes für jedes Pixel eines Eingabebildes;

(b1) Berechnen eines Sättigungs-Mittelwertes des Eingabebildes unter Verwendung in (a) berechneter Sättigungswerte;

(c1) Berechnen eines Verstärkungs-Mittelwertes, wobei der Verstärkungs-Mittelwert ein Verstärkungswert ist, der unter Verwendung des in (b1) berechneten Sättigungs-Mittelwertes berechnet wird;

(c2) Bestimmen, ob das Eingabebild ein vorgegebenes Musterbild ist oder nicht und Berechnen eines Musterverstärkungswertes in Abhängigkeit davon, ob das Eingabebild als das vorgegebene Musterbild bestimmt wird, wobei der Absolutwert einer Pixelzählwertdifferenz zwischen aneinandergrenzenden Sättigungsbereichen und ein Durchschnitt der berechneten Absolutwerte für alle Sättigungsbereiche des Eingabebildes berechnet werden und der Musterverstärkungswert unter Verwendung des berechneten Durchschnitts der Absolutwerte berechnet wird; und

(d) Berechnen eines lokalen Verstärkungswertes für jedes der Pixel unter Verwendung des in (c1) berechneten Verstärkungs-Mittelwertes und der in (a) berechneten Sättigungswerte und adaptives Regulieren der Sättigung jedes der Pixel des Eingabebildes unter Verwendung des lokalen Verstärkungswertes, wobei in Schritt (d) zusätzlich der in (c2) berechnete Musterverstärkungswert zum adaptiven Regulieren der Sättigung jedes der Pixel des Eingabebildes verwendet wird.

**46.** Verfahren nach Anspruch 45, das des Weiteren umfasst:

(c3) Bestimmen, ob jedes der Pixel des Eingabebildes zu einem vorgegebenen Farbbereich gehört, und Berechnen eines Farbverstärkungswertes für ein Pixel in Abhängigkeit davon, ob das Pixel zu dem vorgegebenen Farbbereich gehört,

wobei in Schritt (d) zusätzlich der in (c3) berechnete Farbverstärkungswert zum adaptiven Regulieren der Sättigung jedes der Pixel des Eingabebildes verwendet wird.

**Revendications**

1. Dispositif pour ajuster la saturation d'une image en couleurs, comprenant :

   un calculateur de saturation (120, 920) qui calcule une valeur de saturation pour chacun des pixels d'une image d'entrée ;
   un calculateur de saturation de crête (140, 940) qui détermine une valeur de saturation de crête de l'image d'entrée à l'aide de valeurs de saturation calculées par le calculateur de saturation ;
   un calculateur de gain de crête (150, 950) qui calcule une valeur de gain de crête, où la valeur de gain de crête est une valeur de gain calculée à l'aide de la valeur de saturation de crête déterminée par le calculateur de saturation de crête ;
   un calculateur de gain de motif (180, 980) qui détermine si oui ou non l'image d'entrée est une image de motif prédéterminé et qui calcule une valeur de gain de motif pour l'image de motif prédéterminé en fonction du fait que l'image d'entrée est déterminée, ou non, comme image de motif prédéterminé, où le calculateur de gain de motif calcule la valeur absolue d'une différence de comptage de pixels entre des régions de saturation adjacentes et une moyenne des valeurs absolues calculées pour toutes les régions de saturation de l'image d'entrée, et calcule la valeur de gain de motif à l'aide de la moyenne calculée des valeurs absolues ; et
   un ajusteur de saturation (170, 970) qui ajuste de manière adaptative la saturation de l'image d'entrée à l'aide de la valeur de gain de crête calculée par le calculateur de gain de crête, où l'ajusteur de saturation ajuste la saturation de l'image d'entrée en utilisant, en outre, la valeur de gain de motif calculée par le calculateur de gain de motif.

2. Dispositif selon la revendication 1, comprenant en outre un calculateur d'histogramme (130, 930) qui calcule un histogramme de saturation de l'image d'entrée à l'aide des valeurs de saturation calculées par le calculateur de saturation, où le calculateur de saturation de crête détermine la valeur de saturation de crête à partir de l'histogramme de saturation calculé par le calculateur d'histogramme.

3. Dispositif selon la revendication 1 ou la revendication 2, dans lequel le calculateur de saturation convertit un signal d'image d'entrée en un signal RVB et calcule la saturation pour chacun des pixels sous la forme d'un rapport de la différence entre des valeurs maximum et minimum du signal RVB sur la somme des valeurs maximum et minimum du signal RVB.

4. Dispositif selon la revendication 3, dans lequel le signal d'image d'entrée transmis en entrée au calculateur de saturation est un signal parmi des signaux YCbCr, YUV et YIQ.

5. Dispositif selon la revendication 3 ou la revendication 4, dans lequel lorsque la valeur maximum du signal RVB pour le signal d'image d'entrée traité par le calculateur de saturation est inférieure à une valeur prédéterminée ou est supérieure ou égale à une autre valeur prédéterminée, la valeur maximum du signal d'image d'entrée n'est pas accumulée pour calculer l'histogramme de saturation.

6. Dispositif selon l'une quelconque des revendications 1 à 5, comprenant en outre :

   un calculateur de saturation moyenne (942) qui calcule une valeur de saturation moyenne de l'image d'entrée à l'aide des valeurs de saturation calculées par le calculateur de saturation ; et
   un calculateur de gain moyen (952) qui calcule une valeur de gain moyen, où la valeur de gain moyen est une valeur de gain calculée à l'aide de la valeur de saturation moyenne calculée par le calculateur de saturation moyenne,
   l'ajusteur de saturation calculant une valeur de gain local pour chacun des pixels à l'aide de la valeur de gain moyen calculée par le calculateur de gain moyen et les valeurs de saturation calculées par le calculateur de saturation et ajustant de manière adaptative la saturation de chacun des pixels de l'image d'entrée à l'aide de la valeur de gain local, la valeur de gain de motif et la valeur de gain de crête.

7. Dispositif selon l'une quelconque des revendications 1 à 6, dans lequel le calculateur de gain de crête calcule une valeur de gain de crête pour une valeur de saturation de crête inférieure ou égale à une première valeur de saturation et pour une valeur de saturation de crête supérieure ou égale à une seconde valeur de saturation, où la seconde valeur de saturation est supérieure à la première valeur de saturation, pour être inférieure à celle pour une valeur de saturation de crête entre la première et la seconde valeurs de saturation.

8. Dispositif selon l'une quelconque des revendications 1 à 7, dans lequel le calculateur de saturation de crête détermine une valeur de saturation des pixels correspondant à un pourcentage prédéterminé du nombre total de pixels à partir des pixels ayant la valeur de saturation la plus grande, comme la valeur de saturation de crête.

9. Dispositif selon l'une quelconque des revendications 1 à 8, dans lequel l'ajusteur de saturation ajuste de manière adaptative la saturation de l'image d'entrée en considérant en outre au moins une valeur parmi une valeur de gain système et une valeur de gain utilisateur, où la valeur de gain système contrôle des degrés de l'amélioration de l'image en couleurs.

10. Dispositif selon la revendication 1, dans lequel l'image de motif prédéterminé est une image de mire.

11. Dispositif selon l'une quelconque des revendications 1 à 10, comprenant en outre :

un calculateur de gain de couleur (190, 990) qui détermine si chacun des pixels de l'image d'entrée appartient à une région de couleur prédéterminée et calcule une valeur de gain de couleur pour un pixel en fonction du fait que le pixel appartient ou non à la région de couleur prédéterminée,
l'ajusteur de saturation ajustant de manière adaptative la saturation pour chacun des pixels de l'image d'entrée à l'aide de la valeur de gain de crête calculée par le calculateur de gain de crête, la valeur de gain de motif calculée par le calculateur de gain de motif et la valeur de gain de couleur calculée par le calculateur de gain de couleur.

12. Dispositif selon la revendication 11, dans lequel le calculateur de gain de motif détermine l'image d'entrée comme image de motif prédéterminé si la moyenne des valeurs absolues est supérieure à un premier seuil, détermine l'image d'entrée comme image naturelle si la moyenne des valeurs absolues est inférieure à un second seuil, et délivre en sortie la valeur de gain de motif correspondant à l'image d'entrée.

13. Dispositif selon l'une quelconque des revendications 11 ou 12, dans lequel la région de couleur prédéterminée est une région de couleur de peau.

14. Dispositif selon l'une quelconque des revendications 11 à 13, dans lequel le calculateur de gain de couleur détermine si oui ou non un pixel d'entrée appartient à la région de couleur de peau à l'aide d'une équation elliptique tridimensionnelle ayant une valeur de couleur moyenne de la région de couleur de peau comme coordonnée centrale de l'ellipsoïde et des variations de couleur de peau dépendant de la race ou du système comme rayons de trois axes de l'ellipsoïde, et délivre en sortie la valeur de gain de couleur selon le résultat de la détermination.

15. Dispositif selon l'une quelconque des revendications 11 à 14, dans lequel le calculateur de gain de couleur détermine si un pixel d'entrée appartient à la région de couleur prédéterminée à l'aide de fonctions de gain de couleur pour des valeurs Y, Cb et Cr du pixel d'entrée, et calcule une valeur de gain de couleur pour une valeur YCbCr du pixel d'entrée.

16. Dispositif selon l'une quelconque des revendications 11 à 15, lesquelles se réfèrent à l'une quelconque des revendications 6 à 14, dans lequel le calculateur de gain moyen calcule une valeur de gain moyen pour une valeur de saturation moyenne inférieure ou égale à une première valeur de saturation et pour une valeur de saturation moyenne supérieure ou égale à une seconde valeur de saturation, dans lequel la seconde valeur de saturation est supérieure à la première valeur de saturation, pour être inférieure à celle pour une valeur de saturation moyenne entre la première et la seconde valeurs de saturation.

17. Dispositif selon l'une quelconque des revendications 11 à 16, lesquelles se réfèrent à l'une quelconque des revendications 6 à 15, dans lequel l'ajusteur de saturation calcule une valeur de gain local pour une valeur de saturation moyenne inférieure ou égale à une première valeur de saturation et pour une valeur de saturation supérieure ou égale à une seconde valeur de saturation, dans lequel la seconde valeur de saturation est supérieure à la première valeur de saturation, pour être inférieure à celle pour une valeur de saturation entre la première et la seconde valeurs de saturation.

18. Dispositif selon l'une quelconque des revendications 11 à 17, lesquelles se réfèrent à l'une quelconque des revendications 2 à 16, dans lequel le calculateur d'histogramme calcule de manière sélective un histogramme de saturation pour l'ensemble de la trame de l'image d'entrée ou un histogramme de saturation pour des pixels dans une région d'une fenêtre prédéterminée de l'image d'entrée.

19. Dispositif pour ajuster la saturation d'une image en couleurs, comprenant :

un calculateur de saturation (120, 920) qui calcule une valeur de saturation pour chacun des pixels d'une image d'entrée ;
un calculateur de saturation moyenne (942) qui calcule une valeur de saturation moyenne de l'image d'entrée à l'aide de valeurs de saturation calculées par le calculateur de saturation ;
un calculateur de gain moyen (952) qui calcule une valeur de gain moyen, la valeur de gain moyen étant une valeur de gain calculée à l'aide de la valeur de saturation moyenne calculée par le calculateur de saturation moyenne ;
un calculateur de gain de motif (180, 980) qui détermine si oui ou non l'image d'entrée est une image de motif prédéterminé et qui calcule une valeur de gain de motif en fonction du fait que l'image d'entrée est déterminée, ou non, comme image de motif prédéterminé, le calculateur de gain de motif calculant la valeur absolue d'une différence de comptage de pixels entre des régions de saturation adjacentes et une moyenne des valeurs absolues pour toutes les régions de saturation de l'image d'entrée, et calculant la valeur de gain de motif à l'aide de la moyenne des valeurs absolues ; et
un ajusteur de saturation (170, 970) qui calcule une valeur de gain local pour chacun des pixels à l'aide de la valeur de gain moyen calculée par le calculateur de gain moyen et les valeurs de saturation calculées par le calculateur de saturation et ajuste de manière adaptative la saturation de chacun des pixels de l'image d'entrée à l'aide de la valeur de gain local, l'ajusteur de saturation ajustant de manière adaptative la saturation de chacun des pixels de l'image d'entrée en utilisant, en outre, la valeur de gain de motif calculée par le calculateur de gain de motif.

20. Dispositif selon la revendication 19, comprenant en outre un calculateur d'histogramme (130, 930) qui calcule un histogramme de saturation de l'image d'entrée à l'aide des valeurs de saturation calculées par le calculateur de saturation, le calculateur de saturation moyenne calculant la valeur de saturation moyenne à partir de l'histogramme de saturation calculé par le calculateur d'histogramme.

21. Dispositif selon la revendication 19 ou la revendication 20, dans lequel le calculateur de saturation convertit un signal d'image d'entrée en un signal RVB et calcule la saturation pour chacun des pixels sous la forme d'un rapport de la différence entre des valeurs maximum et minimum du signal RVB sur la somme des valeurs maximum et minimum du signal RVB.

22. Dispositif selon l'une quelconque des revendications 19 à 21, dans lequel le calculateur de gain moyen calcule une valeur de gain moyen pour une valeur de saturation moyenne inférieure ou égale à une première valeur de saturation et pour une valeur de saturation moyenne supérieure ou égale à une seconde valeur de saturation, où la seconde valeur de saturation étant supérieure à la première valeur de saturation, pour être inférieure à celle pour une valeur de saturation moyenne entre la première et la seconde valeurs de saturation.

23. Dispositif selon l'une quelconque des revendications 19 à 22, dans lequel l'ajusteur de saturation calcule une valeur de gain local pour une valeur de saturation inférieure ou égale à une première valeur de saturation et pour une valeur de saturation supérieure ou égale à une seconde valeur de saturation, où la seconde valeur de saturation étant supérieure à la première valeur de saturation, pour être inférieure à celle pour une valeur de saturation comprise entre la première et la seconde valeurs de saturation.

24. Dispositif selon l'une quelconque des revendications 19 à 23, dans lequel l'ajusteur de saturation ajuste de manière adaptative la saturation de l'image d'entrée en considérant en outre au moins une valeur parmi une valeur de gain système et une valeur de gain utilisateur, la valeur de gain système contrôlant des degrés de l'amélioration de l'image en couleurs.

25. Dispositif selon l'une quelconque des revendications 19 à 24, dans lequel le signal d'image d'entrée transmis en entrée au calculateur de saturation est un signal parmi des signaux YCbCr, YUV et YIQ.

26. Dispositif selon l'une quelconque des revendications 19 à 25, dans lequel lorsque la valeur maximum du signal RVB pour le signal d'image d'entrée traité par le calculateur de saturation est inférieure à une valeur prédéterminée ou est supérieure ou égale à une autre valeur prédéterminée, la valeur maximum du signal d'image d'entrée n'est pas accumulée pour calculer l'histogramme de saturation.

27. Dispositif selon la revendication 19, dans lequel l'image de motif prédéterminé est une image de mire.

28. Dispositif selon la revendication 19 ou la revendication 27, dans lequel le calculateur de gain moyen calcule une valeur de gain moyen pour une valeur de saturation moyenne inférieure ou égale à une première valeur de saturation et pour une valeur de saturation moyenne supérieure ou égale à une seconde valeur de saturation, la seconde valeur de saturation étant supérieure à la première valeur de saturation, pour être inférieure à celle pour une valeur de saturation moyenne entre la première et la seconde valeurs de saturation.

29. Dispositif selon l'une quelconque des revendications 19 à 28, comprenant en outre :

   un calculateur de gain de couleur (190, 990) qui détermine si chacun des pixels de l'image d'entrée appartient à une région de couleur prédéterminée et calcule une valeur de gain de couleur pour un pixel en fonction du fait que le pixel appartient ou non à la région de couleur prédéterminée,
   l'ajusteur de saturation ajustant de manière adaptative la saturation pour chacun des pixels de l'image d'entrée à l'aide, en outre, de la valeur de gain de couleur calculée par le calculateur de gain de couleur.

30. Dispositif selon la revendication 29, dans lequel le calculateur de gain de motif détermine l'image d'entrée comme image de motif prédéterminé si la moyenne des valeurs absolues est supérieure à un premier seuil, détermine l'image d'entrée comme image naturelle si la moyenne des valeurs absolues est inférieure à un second seuil, et délivre en sortie la valeur de gain de motif correspondant à l'image d'entrée.

31. Dispositif selon la revendication 29 ou la revendication 30, dans lequel la région de couleur prédéterminée est une région de couleur de peau.

32. Dispositif selon l'une quelconque des revendications 29 à 31, dans lequel le calculateur de gain de couleur détermine si oui ou non un pixel d'entrée appartient à la région de couleur de peau à l'aide d'une équation elliptique tridimensionnelle ayant une valeur de couleur moyenne de la région de couleur de peau comme coordonnée centrale de l'ellipsoïde et des variations de couleur peau dépendant de la race ou du système comme rayons de trois axes de l'ellipsoïde, et délivre en sortie la valeur de gain de couleur selon le résultat de la détermination.

33. Dispositif selon l'une quelconque des revendications 29 à 32, dans lequel le calculateur de gain de couleur détermine si un pixel d'entrée appartient à la région de couleur prédéterminée à l'aide de fonctions de gain de couleur pour des valeurs Y, Cb et Cr du pixel d'entrée, et calcule une valeur de gain de couleur pour une valeur YCbCr du pixel d'entrée.

34. Dispositif selon l'une quelconque des revendications 29 à 33, dans lequel la valeur la plus importante parmi les valeurs de gain local pour les pixels est égale à la valeur de gain moyen calculée à l'aide du calculateur de gain moyen.

35. Dispositif selon l'une quelconque des revendications 29 à 34, lesquelles se réfèrent à l'une quelconque des revendications 20 à 33, dans lequel le calculateur d'histogramme calcule de manière sélective un histogramme de saturation pour l'ensemble de la trame de l'image d'entrée ou un histogramme de saturation pour des pixels dans une région d'une fenêtre prédéterminée de l'image d'entrée.

36. Dispositif selon l'une quelconque des revendications 19 à 35, comprenant en outre :

   un calculateur de saturation de crête (140, 940) qui détermine une valeur de saturation de crête de l'image d'entrée à l'aide de valeurs de saturation calculées par le calculateur de saturation ;
   un calculateur de gain de crête (150, 950) qui calcule une valeur de gain de crête, où la valeur de gain de crête est une valeur de gain calculée à l'aide de la valeur de saturation de crête déterminée par le calculateur de saturation de crête ;
   l'ajusteur de saturation calculant la valeur de gain local pour chacun des pixels à l'aide, en outre, des valeurs de saturation calculées par le calculateur de saturation et ajustant de manière adaptative la saturation de chacun des pixels de l'image d'entrée à l'aide, en outre, de la valeur de gain de crête calculée par le calculateur de gain de crête.

**37.** Écran d'affichage comprenant le dispositif selon l'une quelconque des revendications 1 à 36.

**38.** Télévision numérique comprenant l'écran d'affichage selon la revendication 37.

**39.** Appareil photo numérique comprenant l'écran d'affichage selon la revendication 37.

**40.** Caméscope comprenant l'écran d'affichage selon la revendication 37.

**41.** Processeur d'image comprenant le dispositif selon l'une quelconque des revendications 1 à 36.

**42.** Procédé pour ajuster la saturation d'une image en couleurs, comprenant les étapes consistant à :

(a) calculer une valeur de saturation pour chacun des pixels d'une image d'entrée ;
(b) déterminer une valeur de saturation de crête de l'image d'entrée en se basant sur les valeurs de saturation calculées en (a) ;
(c) calculer une valeur de gain de crête, la valeur de gain de crête étant une valeur de gain calculée à l'aide de la valeur de saturation de crête déterminée en (b) ;
(c1) déterminer si oui ou non l'image d'entrée est une image de motif prédéterminé et calculer une valeur de gain de motif en fonction du fait que l'image d'entrée est déterminée comme l'image de motif prédéterminé, la valeur absolue d'une différence de comptage de pixels entre des régions de saturation adjacentes et une moyenne des valeurs absolues calculées pour toutes les régions de saturation de l'image d'entrée étant calculées et la valeur de gain de motif étant calculée à l'aide de la moyenne calculée des valeurs absolues ; et
(d) ajuster de manière adaptative la saturation de l'image d'entrée à l'aide de la valeur de gain de crête calculée en (c), la valeur de gain de motif déterminée à l'étape (c1) étant en outre utilisée à l'étape (d) pour ajuster de manière adaptative la saturation de l'image d'entrée.

**43.** Procédé selon la revendication 42, comprenant en outre les étapes consistant à :

(b1) calculer une valeur de saturation moyenne de l'image d'entrée à l'aide des valeurs de saturation calculées en (a) ; et
(c2) calculer une valeur de gain moyen, la valeur de gain moyen étant une valeur de gain calculée à l'aide de la valeur de saturation moyenne calculée en (b1),

une valeur de gain local pour chacun des pixels étant calculée à l'étape (d), à l'aide de la valeur de gain moyen calculée en (c2) et des valeurs de saturation calculées en (a), et la saturation de chacun des pixels de l'image d'entrée étant ajustée de manière adaptative en prenant en outre en considération la valeur de gain local.

**44.** Procédé selon la revendication 42 ou la revendication 43, comprenant en outre l'étape consistant à :

(c3) déterminer si chacun des pixels de l'image d'entrée appartient à une région de couleur prédéterminée et calculer une valeur de gain de couleur pour un pixel en fonction du fait que le pixel appartient ou non à la région de couleur prédéterminée,

la valeur de gain de couleur calculée à l'étape (c3) étant en outre utilisée à l'étape (d) pour ajuster de manière adaptative la saturation de l'image d'entrée.

**45.** Procédé pour ajuster la saturation d'une image en couleurs, comprenant les étapes consistant à :

(a) calculer une valeur de saturation pour chacun des pixels d'une image d'entrée ;
(b1) calculer une valeur de saturation moyenne de l'image d'entrée à l'aide des valeurs de saturation calculées en (a) ;
(c1) calculer une valeur de gain moyen, la valeur de gain moyen étant une valeur de gain calculée à l'aide de la valeur de saturation moyenne calculée en (b1) ;
(c2) déterminer si oui ou non l'image d'entrée est une image de motif prédéterminé et calculer une valeur de gain de motif en fonction du fait que l'image d'entrée est déterminée comme l'image de motif prédéterminé, la valeur absolue d'une différence de comptage de pixels entre des régions de saturation adjacentes et une moyenne des valeurs absolues calculées pour toutes les régions de saturation de l'image d'entrée étant calculées, et la valeur de gain de motif étant calculée à l'aide de la moyenne calculée des valeurs absolues ; et

(d) calculer une valeur de gain local pour chacun des pixels à l'aide de la valeur de gain moyen calculée en (c1) et des valeurs de saturation calculées en (a) et ajuster de manière adaptative la saturation de chacun des pixels de l'image d'entrée à l'aide de la valeur de gain local, la valeur de gain de motif calculée à l'étape (c2) étant en outre utilisée à l'étape (d) pour ajuster de manière adaptative la saturation de chacun des pixels de l'image d'entrée.

46. Procédé selon la revendication 45, comprenant en outre l'étape consistant à :

(c3) déterminer si chacun des pixels de l'image d'entrée appartient à une région de couleur prédéterminée et calculer une valeur de gain de couleur pour un pixel en fonction du fait que le pixel appartient ou non à la région de couleur prédéterminée,

la valeur de gain de couleur calculée à l'étape (c3) étant en outre utilisée à l'étape (d) pour ajuster de manière adaptative la saturation de chacun des pixels de l'image d'entrée.

**FIG. 1**

## FIG. 2

NUMBER OF
PIXELS

S mean    S peak    1    S

## FIG. 3

g peak

1

0.5    1    S peak

# FIG. 4

# FIG. 5

(a) ELLIPSOIDAL GAIN
FUNCTION FOR
SKIN COLOR REGION

(b) A QUARTER OF
THE ELLIPSOID

(c)

EP 1 326 425 B1

# FIG. 6

(a)

(b)

(c)

for Y=0.5

(d)

EP 1 326 425 B1

# FIG. 7

EP 1 326 425 B1

FRAME MEMORY 710

SATURATION CALCULATOR 720

$S(x,y)$

HISTOGRAM CALCULATOR 730

MEAN SATURATION CALCULATOR 742

$S_{peak}$

MEAN GAIN CALCULATOR 752

$g_{peak}$

COLOR GAIN CALCULATOR 790

$g_{skin}(x,y)$

FINAL GAIN CALCULATOR 760

$g_p$

PATTERN GAIN CALCULATOR 780

$g$

770

$YCbCr_{Enh}(x,y)$

# FIG. 8A

# FIG. 8B

# FIG. 9

**EP 1 326 425 B1**

## REFERENCES CITED IN THE DESCRIPTION

### Patent documents cited in the description

- EP 0989739 A
- EP 1130545 A
- US 5181105 A
- US 4203671 A